(19) Europäisches Patentamt / European Patent Office / Office européen des brevets

(11) **EP 4 400 920 B1**

(12) **EUROPEAN PATENT SPECIFICATION**

(45) Date of publication and mention
of the grant of the patent:
**01.07.2026 Bulletin 2026/27**

(21) Application number: **23151473.8**

(22) Date of filing: **13.01.2023**

(51) International Patent Classification (IPC):
*G05B 13/04* (2006.01)     *B60K 6/387* (2007.10)
*B60W 10/02* (2006.01)     *B60W 10/06* (2006.01)
*B60W 10/08* (2006.01)     *B60W 20/40* (2016.01)
*B60W 50/00* (2006.01)

(52) Cooperative Patent Classification (CPC):
**G05B 13/048; B60K 6/387; B60W 10/02;
B60W 10/06; B60W 10/08; B60W 20/40;
B60W 50/0098;** B60W 2050/0008;
B60W 2050/0024; B60W 2050/0037;
B60W 2050/0088; G05B 2219/41406

(54) **A METHOD FOR CALIBRATING FEEDBACK GAINS OF AN LQI CONTROLLER**

VERFAHREN ZUR KALIBRIERUNG DER RÜCKKOPPLUNGSVERSTÄRKUNG EINES
LQI-STEUERGERÄTS

PROCÉDÉ D'ÉTALONNAGE DE GAINS DE RÉTROACTION D'UN CONTRÔLEUR LQI

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**17.07.2024 Bulletin 2024/29**

(73) Proprietors:
• **Ningbo Geely Automobile Research
& Development Co. Ltd.
Hangzhou Bay New District
Ningbo 315336 (CN)**
• **Zhejiang Geely Holding Group Co., Ltd.
Hangzhou, Zhejiang 310051 (CN)**

(72) Inventor: **PIRACHA, Muddassar
41703 Göteborg (SE)**

(74) Representative: **Zacco Sweden AB
P.O. Box 5581
Löjtnantsgatan 21
114 85 Stockholm (SE)**

(56) References cited:
• **GONZALES OSCAR ET AL: "Sliding Mode
Controller Based on a Linear Quadratic Integral
Regulator Surface for Power Control on a Dual
Active Bridge Converter", 2018 IEEE THIRD
ECUADOR TECHNICAL CHAPTERS MEETING
(ETCM), IEEE, 15 October 2018 (2018-10-15),
pages 1 - 6, XP033480492, DOI: 10.1109/
ETCM.2018.8580294**
• **NOUTI DIALA ET AL: "Optimal Control for
Improved Damping of Virtual Synchronous
Machines", 2020 IEEE PES INNOVATIVE SMART
GRID TECHNOLOGIES EUROPE (ISGT-
EUROPE), IEEE, 26 October 2020 (2020-10-26),
pages 559 - 563, XP033855334, DOI: 10.1109/
ISGT-EUROPE47291.2020.9248816**
• **SOUZA DARIELSON A ET AL: "Optimal LQI and
PID Synthesis for Speed Control of Switched
Reluctance Motor Using Metaheuristic
Techniques", INTERNATIONAL JOURNAL OF
CONTROL, AUTOMATION AND SYSTEMS, vol.
19, no. 1, 30 March 2020 (2020-03-30), pages 221 -
229, XP037334186, ISSN: 1598-6446, DOI:
10.1007/S12555-019-0911-X**

EP 4 400 920 B1

- HERRERA MARCO ET AL: "Processes with variable dead time: Comparison of hybrid control schemes based on internal model", 2017 IEEE SECOND ECUADOR TECHNICAL CHAPTERS MEETING (ETCM), IEEE, 16 October 2017 (2017-10-16), pages 1 - 6, XP033292202, DOI: 10.1109/ETCM.2017.8247483
- FENG FENG ZHENG-PING ZHENG-PING ET AL: "Design of continuous and discrete LQI control systems with stable inner loops", SHANGHAI JIAO TONG DA XUE XUE BAO, 1 December 2007 (2007-12-01), pages 787 - 792, XP093055640, Retrieved from the Internet <URL:https://www.researchgate.net/profile/Zhengping-Feng/publication/265706415_Design_of_continuous_and_discrete_LQI_control_systems_with_stable_inner_loops/links/546562580cf2052b509f2fdc/Design-of-continuous-and-discrete-LQI-control-systems-with-stable-inner-loops.pdf> [retrieved on 20230619]
- PIRACHA MUDDASSAR ZAHID ET AL: "Time optimal control of gearbox synchronizers for minimizing noise and wear", 2020 IEEE CONFERENCE ON CONTROL TECHNOLOGY AND APPLICATIONS (CCTA), IEEE, 24 August 2020 (2020-08-24), pages 573 - 580, XP033832068, DOI: 10.1109/CCTA41146.2020.9206254
- PIRACHA MUDDASSAR ZAHID ET AL: "Feedback Control of Synchronizers for Reducing Impacts during Sleeve to Gear Engagement", vol. 2, no. 4, 31 January 2020 (2020-01-31), pages 2067 - 2080, XP093055609, ISSN: 2641-9645, Retrieved from the Internet <URL:http://dx.doi.org/10.4271/2020-01-0960> DOI: 10.4271/2020-01-0960

2

**Description**

TECHNICAL FIELD

The present disclosure relates to method for calibrating the feedback gains of an LQI controller. The disclosure further relates to a dynamic physical system comprising an LQI controller.

The method and system according to the disclosure can be arranged in many types of implementations over a broad technical field, where a low steady state error is required.

Moreover, even if the method and system according to the disclosure will be described primarily in relation to a hybrid electric powertrain of a car, the method and system are not restricted to this particular implementation, but may alternatively be used or installed or implemented in many other types of implementations having a controllable device, such as an electric machine, an actuator, a power generator, or the like.

BACKGROUND

In the area of feedback controllers for controlling nearly any type of dynamic physical systems having a controllable device, the LQI controller operating based on a State Space model representing a physical system is a well-known design.

Calibration of an LQI controller is generally required upon initial start-up of the physical system, and sometimes also in connection with replacement or maintenance of system hardware, such as replacement/maintenance of actuators, motors, clutches, etc., because such replacement/maintenance may result in different values of relevant system parameters, such as inertia, damping constants, spring constants, friction, actuator speed and acceleration, etc.

However, calibration of an LQI controller is generally problematic for various reasons. For example, calibration by means of manual tuning of the LQI controller based on try and error approach may be complicated and time-consuming and may result in reduced performance. Furthermore, computer aided calibration involving extensive matrix calculations may be undesirable in technical implementations having relatively low amount of memory and processing power.

It is thus desirable to provide improved calibration of an LQI controller.

Examples of known LQI controllers: GONZALES OSCAR ET AL: Sliding Mode Controller Based on a Linear Quadratic Integral Regulator Surface for Power Control on a Dual Active Bridge Converter", 2018 IEEE THIRD ECUADOR TECHNICAL CHAPTERS MEETING (ETCM), IEEE, 15 October 2018;

PIRACHA MUDDASSAR ZAHID ET AL: "Time optimal control of gearbox synchronizers for minimizing noise and wear",2020 IEEE CONFERENCE ON CONTROL TECHNOLOGY AND APPLICATIONS (CCTA), IEEE, 24 August 2020;

PIRACHA MUDDASSAR ZAHID ET AL: "Feedback Control of Synchronizers for Reducing Impacts during Sleeve to Gear Engagement",SAE INTERNATIONAL JOURNAL OF ADVANCES AND CURRENT PRACTICES IN MOBILITY,vol. 2, no. 4 31 January 2020.

SUMMARY

The invention is defined by the method of claim 1 and the system of claim Optional aspects of the invention are provided in the dependent claims.

According to a first aspect of the present disclosure, there is provided a method for calibrating the feedback gains of an LQI controller implemented in an electronic control unit operatively connected for controlling operation of a physical electric or electro-mechanical device of a dynamic physical system, in particular a vehicle power train, wherein the LQI controller is based on an augmented State Space model having the following form:

$$\begin{bmatrix} \dot{x} \\ \varepsilon \end{bmatrix} = \boldsymbol{A}_{aug} x + \boldsymbol{B}_{aug} u + \begin{bmatrix} 0 \\ 1 \end{bmatrix} ref$$

$$y = \boldsymbol{C}_{aug} \begin{bmatrix} x \\ \varepsilon \end{bmatrix}$$

$$\boldsymbol{A}_{aug} = \begin{bmatrix} \boldsymbol{A} & 0 \\ -\boldsymbol{C} & 0 \end{bmatrix}, \boldsymbol{B}_{aug} = [\boldsymbol{B} \quad 0]^T, \boldsymbol{C}_{aug} = [\boldsymbol{C} \quad 0]$$

wherein the augmented State Space model is based on the following State Space model representing the physical system:

$$\dot{x} = \boldsymbol{A}x + \boldsymbol{B}u$$

$$y = \boldsymbol{C}x$$

wherein *x* is control system state vector, $\varepsilon$ is control system tracking error, *u* is control system input, *ref* is control system target references value, *y* is control system output, and **A, B, C** represent matrices derived from a mathematical model of the dynamic physical system, and wherein the method of calibrating the LQI controller comprises: obtaining values of various physical parameters of the dynamic system; inserting the obtained values of the physical parameters into predetermined equations for calculating numerical values of the individual terms of a P matrix, wherein the P matrix is the solution to the Algebraic Riccati equation, and wherein said equations include the physical parameters of the system and functional requirements of the system; and calculating new feedback gains for the LQI controller based on the matrix equation $K = r^{-1}\boldsymbol{B}_{aug}^T\boldsymbol{P}$ , based on an arbitrarily chosen positive value of r, wherein the terms of the K matrix corresponds to the feedback gains.

According to a second aspect of the present disclosure, there is provided a dynamic physical system, in particular a vehicle power train, comprising: a physical electric or electro-mechanical device; and an electronic control unit operatively connected to the physical electric or electro-mechanical device, wherein the electronic control unit comprises an LQI controller configured for controlling operation of the physical electric or electro-mechanical device, wherein the LQI controller is based on an augmented State Space model representing the dynamic physical system, wherein the augmented State Space model may have the following form:

$$\begin{bmatrix} \dot{x} \\ \varepsilon \end{bmatrix} = \boldsymbol{A}_{aug}x + \boldsymbol{B}_{aug}u + \begin{bmatrix} 0 \\ 1 \end{bmatrix} ref$$

$$y = \boldsymbol{C}_{aug}\begin{bmatrix} x \\ \varepsilon \end{bmatrix}$$

$$\boldsymbol{A}_{aug} = \begin{bmatrix} \boldsymbol{A} & 0 \\ -\boldsymbol{C} & 0 \end{bmatrix}, \boldsymbol{B}_{aug} = [\boldsymbol{B} \quad 0]^T, \boldsymbol{C}_{aug} = [\boldsymbol{C} \quad 0],$$

wherein the augmented State Space model is based on the following State Space model representing the physical system:

$$\dot{x} = \boldsymbol{A}x + \boldsymbol{B}u$$

$$y = \boldsymbol{C}x ,$$

wherein *x* is control system state vector, $\varepsilon$ is control system tracking error, *u* is control system input, *ref* is control system target references value, *y* is control system output, and A, B, C represent matrices derived from a mathematical model of the dynamic physical system, wherein the electronic control unit further comprises a data memory including predetermined equations for calculating numerical values of the individual terms of a **P** matrix, wherein the **P** matrix is the solution to the Algebraic Riccati equation, and wherein said equations include the physical parameters of the system, wherein the feedback gains of the LQI controller is configured to be calibrated by: obtaining values of various physical parameters of the dynamic system and functional requirements of the system; inserting the obtained values of the physical parameters into the predetermined equations for calculating numerical values of the individual terms of a **P** matrix; and calculating new feedback gains for the LQI controller based on the matrix equation $K = r^{-1}\boldsymbol{B}_{aug}^T\boldsymbol{P}$ , based on an arbitrarily chosen positive value of r, wherein the terms of the **K** matrix corresponds to the feedback gains.

In this way, it becomes possible to perform calibration of the LQI controller with significantly less processing power, because the matrix calculations may largely be omitted, and the obtained values of the parameters may instead be inserted directly into the equations for calculating the terms for the P matrix. This enables quick and simplified calculation of the P matrix, and subsequently calculation of the new feedback gains, without having to first calculate a numerical version of for example the A matrix, and transformation of this matrix to controllable canonical form. Hence, the method for calibration of an LQI controller according to the present disclosure is particularly beneficial in technical implementations having relatively low amount of memory and processing power, such as for example vehicle implementations.

Further advantages are achieved by implementing one or several of the features of the dependent claims.

In some example embodiments, the P matrix is a diagonal matrix having the following form:

$$P = \begin{bmatrix} p_{11} & p_{12} & \cdots & p_{1n} \\ p_{12} & p_{22} & \cdots & p_{2n} \\ \cdots & \cdots & \cdots & p_{3n} \\ p_{1n} & p_{2n} & \cdots & p_{nn} \end{bmatrix}.$$

In some example embodiments, that may be combined with any one or more of the above-described embodiments, each of the equations for calculating the terms of the **P** matrix is a function of not more than constants, obtainable physical parameters of the dynamic system, other terms of the **P** matrix, and terms of the **Q** matrix. In other words, the derived equations of the P matrix can be calculated based merely on physical parameters of the physical system.

In some example embodiments, that may be combined with any one or more of the above-described embodiments, the physical parameters of the dynamic system are obtained by manually by a user that is measuring, detecting or estimating the values of the physical parameters of the dynamic system, and/or by the electronic control unit that automatically conducts measurements, detects or estimates the values of the physical parameters of the dynamic system. The calibration process may thus requires some manual input, unless the system autonomously determines the required updated values of the relevant physical parameters.

In some example embodiments, that may be combined with any one or more of the above-described embodiments, the step of calculating feedback gains for the LQI controller is free from matrix calculation involving a numerical representation of matrix A of the dynamic physical system. This results in reduced computation load on the CPU for performing the calibration.

In some example embodiments, that may be combined with any one or more of the above-described embodiments, the method further comprises a setup phase of the LQI controller that is performed before said calibration of the feedback gains **K,** wherein the setup phase includes: determining the terms of the matrices **A, B** and **C** in form of ones, zeros, and equations having physical constants of the system as expression, while omitting the step of transforming the matrices **A, B** and **C** to a controllable canonical form; determining a feedback control system having an Integral Linear Quadratic (LQI) controller that outputs system input u that minimizes the criteria *J* where $J = \int_0^\infty [x^T \quad \varepsilon] Q [x^T \quad \varepsilon] + u^T r u$ , wherein *Q* is matrix and *r* is a scalar, and wherein the LQI feedback controller includes said feedback gains; determining the characteristic equation of the control system; determining the transfer function of the control system, and subsequently determining the location of the poles of the transfer function; and deriving equations for the terms of each of the **Q** and **P** matrix using the Algebraic Riccati Equation:

$$\boldsymbol{PA}_{aug} + \boldsymbol{A}_{aug}^T \boldsymbol{P} - \boldsymbol{PB}_{aug} r^{-1} \boldsymbol{B}_{aug}^T \boldsymbol{P} + \boldsymbol{Q} = 0$$ . The setup phase is generally performed only once and may for example be performed during a design phase of the physical system.

In some example embodiments, that may be combined with any one or more of the above-described embodiments, the characteristic equation of the closed loop control system has the following form:

$$\det\left(sI - A_{aug} + B_{aug} r^{-1} B_{aug}^T P\right) = 0 .$$

In some example embodiments, that may be combined with any one or more of the above-described embodiments, the equations for the terms of the **P** matrix are also derived based on the denominator of the transfer function in combination with the coefficients and constant terms of the characteristic polynomial of the closed loop system. The transfer function may thus be used for finding the algebraic solution to the equations of the P matrix.

In some example embodiments, that may be combined with any one or more of the above-described embodiments, the method further comprises determining the location of the poles of the transfer function by Laplace-inverse-transforming the denominator of the transfer function and inputting the values of any point of a step response of the transfer function G(s), thereby enabling calculation of the natural frequency $w_n$, which gives the location of the poles of the transfer function. The location of the poles is generally required for being able to calculate the equations of the terms of the P matrix.

In some example embodiments, that may be combined with any one or more of the above-described embodiments, the transfer function includes a damping ratio $\zeta$, and wherein the damping ratio $\zeta$ is selected to be equal to about 1.0, or exactly 1.0. A critically damped system if often a good choice, because this may eliminate overshoot and thus a simplified control of controllable device.

In some example embodiments, that may be combined with any one or more of the above-described embodiments, the transfer function includes a natural frequency $w_n$.

In some example embodiments, that may be combined with any one or more of the above-described embodiments, the Q matrix is a diagonal weight matrix having the following form: $Q = \begin{bmatrix} q_1 & \cdots & 0 \\ \vdots & \ddots & \vdots \\ 0 & \cdots & q_n \end{bmatrix}$ .

In some example embodiments, that may be combined with any one or more of the above-described embodiments, the step of omitting transformation of the matrices **A, B** and **C** to a controllable canonical form enables the terms of matrices **A, B** and **C** to retain their original expressions as functions of detectable system parameters, such that the equations for calculating the terms of the **P** matrix may be expressed in terms of as functions of detectable system parameters, thereby enabling computational-easy calculation of new feedback gains suitable for implementation in a low-computational system, such as in particular a vehicle system.

In some example embodiments, that may be combined with any one or more of the above-described embodiments, the physical electric or electro-mechanical device of the dynamic physical system is an actuator, a motor, a pump, a light or RF source, or an electro-dynamic device.

In some example embodiments, that may be combined with any one or more of the above-described embodiments, the dynamic physical system is a vehicle system, specifically a vehicle power train system, and more specifically a vehicle power train system having a first electric machine operatively connected to a first part of a dog clutch, wherein the electronic controller controls the rotational speed of the first part of the dog clutch for speed synchronising with a second part of the dog clutch, such that the first and second dog clutch parts can be shifted from disengaged state to engaged state in a smooth and noise-free manner. Implementing an LQI controller for the dog clutch that shifts driving mode between serial and parallel hybrid driving mode is beneficial, because a low steady state error is required for ensuring a smooth and noise less engagement, and because the engagement process is not time critical.

In some example embodiments, that may be combined with any one or more of the above-described embodiments, the vehicle power train system is implemented in a hybrid electric vehicle having a combustion engine drivingly connected to the first electric machine, and second electric machine drivingly connected to the second part of the dog clutch, and wherein shifting of the first and second dog clutch parts from disengaged state to mutually engaged state results in switching from serial to parallel operation of the hybrid electric vehicle. Implementing an LQI controller for the dog clutch that shifts driving mode between serial and parallel hybrid driving mode is beneficial, because a low steady state error is required for ensuring a smooth and noise less engagement, and because the engagement process is not time critical.

In some example embodiments, that may be combined with any one or more of the above-described embodiments, the physical parameters of the dynamic system are configured to be obtained by manually by a user that is measuring, detecting or estimating the values of the physical parameters of the dynamic system, and/or by the electronic control unit that automatically conducts measurements, detects or estimates the values of the physical parameters of the dynamic system.

In some example embodiments, that may be combined with any one or more of the above-described embodiments, wherein the data memory further includes the terms of the matrices **A, B** and **C** in form of ones, zeros, and equations having physical constants of the system as expression, wherein the matrices **A, B** and **C** have not been transformed into a controllable canonical form, wherein the LQI controller is configured to output a control system input u that minimizes the criteria $J$ where $J = \int_0^\infty [x^T \quad \varepsilon] Q [x^T \quad \varepsilon] + u^T r u$, and where $Q$ is matrix and r is a scalar, wherein the equations for the terms of the **Q** matrix is stored in the data memory.

In some example embodiments, that may be combined with any one or more of the above-described embodiments, the matrices **A, B** and **C** stored in the data memory have not been transformed into a controllable canonical form, and the terms of matrices **A, B** and **C** are therefore retained in their original expressions as functions of detectable system parameters, such that the equations for calculating the terms of the **P** matrix may be expressed in terms of as functions of detectable system parameters, thereby enabling computational-easy calculation of new feedback gains suitable for implementation in a low-computational system, such as in particular a vehicle system.

The present disclosure also relates to a hybrid electric vehicle having a vehicle power train system including: a dog clutch having first and second parts; a combustion engine drivingly connected to the first electric machine that is operatively connected to the first part of the dog clutch; a second electric machine drivingly connected to the second part of the dog clutch, and a dynamic physical system as described above.

In some example embodiments, that may be combined with any one or more of the above-described embodiments, a shift of the first and second dog clutch parts from disengaged state to mutually engaged state is configured to switch operation of the hybrid electric vehicle from serial to parallel operation.

Further features and advantages of the invention will become apparent when studying the following description. The skilled person in the art realizes that different features of the present disclosure may be combined to create embodiments other than those explicitly described hereinabove and below, as long as the invention remains within the scope of the appended claims, which define the invention.

BRIEF DESCRIPTION OF DRAWINGS

The method and system according to the disclosure will be described in detail in the following, with reference to the attached drawings, in which

Fig. 1A        shows schematically a side-view of a vehicle having a hybrid electric drivetrain,

Fig. 1B        shows schematically a layout of an example embodiment of a hybrid electric drivetrain,

Fig. 2         shows speed and torque plot over time for a speed synchronization phase,

Fig. 3         shows a schematic view of an example embodiment of a dog clutch including a dog clutch actuation mechanism,

Fig. 4A-D      show four different phases of a dog teeth engagement,

Fig. 5         shows noise result of a lab test of clutch engagements,

Fig. 6A-B      show the impact of drag torque on dog teeth motion path during engagement,

Fig. 7         shows schematically a 2DOF torsional system,

Fig. 8         shows a linear state feedback control system,

Fig. 9         shows a speed plot over time for a speed synchronization phase,

Fig. 10        shows a linear state feedback control system with LQI controller,

Fig. 11        shows a step response of a fourth order system,

Fig. 12        shows a step response of a critically damped fourth order system,

Fig. 13        shows rotational speed states during speed synchronization,

Fig. 14        shows controller performance fulfilling functional requirements,

Fig. 15        shows controller performance for different functional requirements,

Fig. 16        shows Vibration isolation for controllers with different functional requirements with thick dotted lines for *tsynch*=2 *sec* and thin dashed lines for *tsynch*=1 *sec,*

Fig. 17A-B     shows schematically the main steps of two embodiments of the method according to the disclosure,

Fig. 18        shows schematically a general system according to the disclosure.

## DESCRIPTION OF EXAMPLE EMBODIMENTS

Various aspects of the disclosure will hereinafter be described in conjunction with the appended drawings to illustrate and not to limit the disclosure, wherein like designations denote like elements.

The disclosure relates to a method for calibration of an LQI controller that is provided for implementing a feedback control strategy to minimize one or more operational parameters of a physical system, as well as a corresponding dynamic physical system including a LQI controller.

LQI controllers in general have the advantage of providing a robust state feedback design in combination with no steady state error due to the integrator part, thereby rendering LQI controllers highly useful, for example in in applications where a steady state error is not acceptable.

The LQI calibration process disclosed herein may thus be implemented in many different types of physical systems in a many different technical areas, such as for example, but not restricted to, vehicles, avionics, marine vessels, energy power generators, etc.

One specific implementation of a LQI controller is for controlling speed synchronization of a dog clutch prior to engagement for providing a smooth and noise-free cutch engagement process.

Calibration of the LQI controller enables minimization of mechanical noise during dog clutch engagement. Dog clutches are used in a large variety of technical implementations for enabling selective torque transfer between first and second dog clutch portions.

Dog clutch engagement process may for example occur during automatic gearshifts in a stepped transmission, such as for example an automatic single or dual clutch transmission, or an automated manual transmissions (AMT), or the like. Alternatively, or in addition, dog clutch engagement process may occur when shifting a conventional dog clutch from disengaged state to engaged state. A conventional dig clutch herein refers to a dog clutch having a first clutch portion rotationally fixed to a first shaft, a second clutch portion rotationally fixed to a second shaft that is separate but aligned with the first shaft. Dog clutch engagement may be accomplished by axially sliding an outer clutch engagement sleeve for selectively setting the first and second clutch portions in rotational connected state. Alternatively, dog clutch engagement may be accomplished by axially sliding for example the first clutch portion relative to the first shaft for selectively setting the first and second clutch portions in rotational connected state.

The use of a relatively simple and robust dog clutch for selective torque transfer between a power source and a power consumer provides a low cost overall design, and a calibration process of the LQI controller that controls the clutch engagement process may provide substantially interference-free low-noise engagement with little wear, thereby providing increased lifetime, reduced maintenance and improved user satisfaction.

The method for calibration of an LQI controller, as well as a corresponding dynamic physical system including a LQI controller, will be described more in detail below in an example implementation of the dog clutch in a powertrain of a hybrid electric vehicle. The method and system according to the present disclosure is however not limited to this specific example implementation, but may alternatively be implemented in a large variety of technical systems.

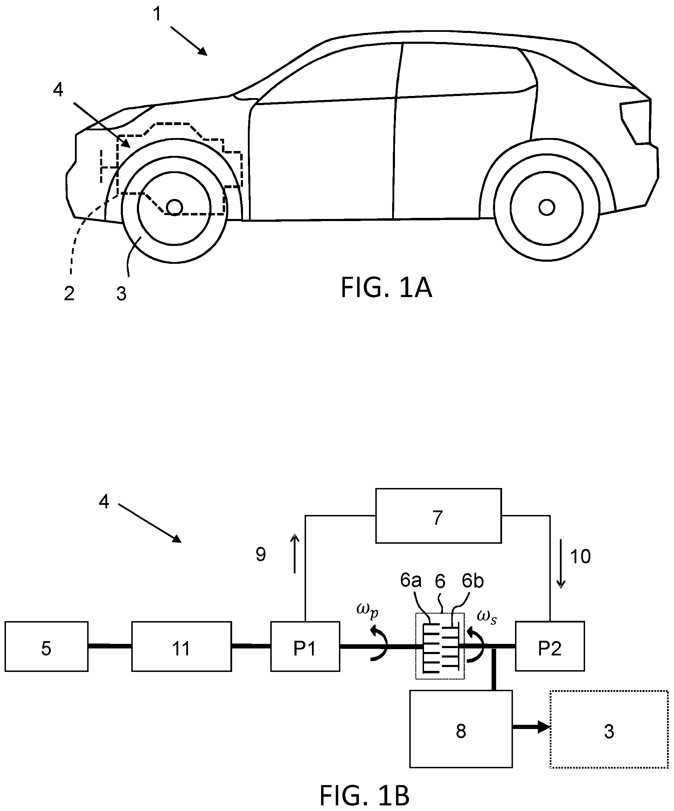

For setting the dog clutch and vehicle powertrain according to this example embodiment in a context, figure 1A shows schematically a car 1 having a powertrain 4 including a propulsion power source 2, such as internal combustion engine and an electric machine, drivingly connected to driving wheels 3 of the car 1 via a transmission.

The example powertrain 4 of the hybrid electric vehicle 1 is described more in detail with reference to figure 1B. The powertrain 4 of the hybrid electric vehicle comprises an internal combustion engine (ICE) 5 drivingly connected to a first electric machine P1 that is arranged for charging a high-voltage battery 7, as indicated in figure 1B by a charging arrow 9. The powertrain 4 further comprises a second electric machine P2 that is powered by the battery 7 and drivingly connected to the vehicle wheels 3 via a transmission 8 for converting the rotational speed of the second electrical motor P2 to suitable vehicle wheel speed. Powering of the second electric machine P2 by means of electrical power from the battery 7 is indicated in figure 1B by a discharging arrow 10.

For efficiency during driving, at high vehicle speeds the ICE 5 may become drivingly connected to wheels 3 via a dog clutch 6, hence shifting the vehicle from series to parallel hybrid mode.

As schematically illustrated in figure 1B, the internal combustion engine 5 may be connected to the first electric machine P1 via a dual mass flywheel (DMF) 11. The first electric machine P1 is connected to the first part 6a of the dog clutch 6, and the secondary part 6b of the dog clutch 6 is connected to the second electric machine P2. Power is supplied to the second electric machine P2 by the battery 7. Power levels of the second electric machine P2 may for example be in the range of 50 - 300 kW, specifically in the range of 100-150 kW, depending on the vehicle size. The ICE may have a similar power range.

It is shown by experimental results that if the speed difference between the two sides, i.e. first and second parts 6a, 6b, of the dog clutch 6 is below a certain level the engagement will be without clonk noise. In this example embodiment of the disclosure, the designed state feedback Linear Quadratic Integral (LQI) control provides the synchronization torque request to the first electric machine P1, hence matching the speed of the first part 6a of dog clutch 6 with the second part 6b of the dog clutch 6 under the disturbance from combustion torque of the combustion engine 5.

Normally LQI controllers are tuned by trial-and-error methods or by extensive computational-heavy matrix calculations, but this disclosure presents an algebraic approach where the feedback gains of the LQI controller are calculated based solely upon the physical parameters of the system, the required time for speed synchronization and acceptable values of speed difference from experimental results. This approach minimizes the need for manual tuning and can deliver the controller gains for any size and version of the transmission by just modifying the parameter values and functional requirements.

While driving, the vehicle 1 can be operating in different driving modes. For example, the powertrain of the hybrid electric vehicle according to the example illustrated in figure 1B, the powertrain can be operated in following driving modes:

1. Pure Electric
2. Series Hybrid
3. Parallel Hybrid

In pure electric driving mode the ICE 5 is shut off, the dog clutch 6 is set in open state, and the second electric machine P2 is providing the driving torque to the wheels 3. The discharge power flow from the battery 7 to the second electric machine P2 is shown by arrow 10.

When state of charge of the battery 7 is low the powertrain 5 of the vehicle 1 may be shifted to series hybrid driving mode. Then the first electric machine P1 motor can take power from the battery 7 for temporarily operating as an engine starter motor. Once the ICE 5 is running, the ICE 5 may for example be used as a range extender and the battery 7 is charged by electrical energy supplied and generated by the first electric machine P1.

Furthermore, when the vehicle speed is larger than a particular value $v_1$, for efficiency the powertrain 4 of the vehicle 1 may be set in a parallel hybrid driving mode. In parallel driving mode the dog clutch 6 is closed, hence drivingly connecting the ICE 5 with the vehicle wheels 3. Switching the driving mode from pure electric or series hybrid driving mode to parallel driving mode comprises three distinct phases.

1. Speed synchronization
2. Dog clutch engagement
3. Torque Ramp up

In the first phase "Speed synchronization" the rotational speed $\omega_p$ of primary side 6a of dog clutch 6, in figure 1B is controlled, by means of the first electric machine P1, to match the rotational speed $\omega_s$ of secondary side 6b of dog clutch 6. The speed difference the primary and secondary sides 6a, 6b of the dog clutch 6, i.e. speed different between $\omega_p$ and $\omega_s$, at the end of phase 1 determines the level of noise generated in phase 2: "Dog Clutch Engagement". Experimental results presented in this disclosure show the limits on speed difference at the end of phase 1 which will lead to noise-less dog clutch engagement.

To minimize the speed difference at dog clutch engagement, a torque request on the first electric machine P1 is calculated by the feedback controller designed in the later sections of this disclosure. From figure 1B, it can be seen that primary side 6a of dog clutch 6 consists of two inertias i.e. ICE and the first electric machine P1 connected by an elastic coupling in the dual mass flywheel 11. This disclosure provides an algebraic approach for calculating the weighting matrices of the LQI controller based the algebraic Riccati equation, while clearly defining the weighting matrices based on physical parameters of the two inertia system, the required speed synchronization time and limits on speed difference at the end of speed synchronization. This new approach minimizes the need for manual tuning of the controller, while fulfilling the stability and noise rejection requirements.

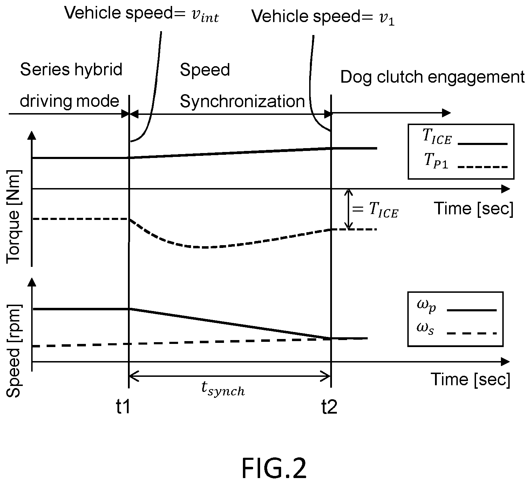

Figure 2 shows the first two phases of the mode switch during vehicle acceleration. Before time point t1, vehicle speed is less than a particular value $v_{init}$, the first electric machine P1 is running in generator mode and is applying a constant braking torque on the engine. At time point t1, vehicle speed is equal to $v_{init}$ and the speed synchronization phase starts. During the speed synchronization phase, the braking torque of the first electric machine P1 is temporarily increased until the desired engine speed is reached at time point t2, which enables a smooth and noise-free engagement of the primary and secondary sides of the dog clutch 6. This braking torque during speed synchronization is calculated by the feedback controller explained in the later sections of this disclosure.

Speed synchronization between primary and secondary side can alternatively be achieved by simply cutting the fuel to the ICE 5 and letting the speed of the primary side 6a of the dog clutch 6 decrease under friction, but is more controllable to use braking torque from the first electric machine P1.

Speed synchronization takes time $t_{synch}$. It is assumed that the speed $\omega_s$ of the secondary side 6b the dog clutch 6 at time point t2 is accurately predicted by the hybrid electric powertrain, and vehicle speed is equal to $v_1$ at time point t2. Based on vehicle acceleration $a_{veh}$, duration of the synchronisation time $t_{synch}$, vehicle speed $v_1$ at time point t2, and vehicle speed $v_{init}$ at time point t1 can be calculated by

$$v_{init} = v_1 - a_{veh} t_{synch} \tag{1}$$

In this disclosure

$$t_{synch} = 2 \, sec \tag{2}$$

Since speed synchronization is not time critical for this particular transmission, two seconds is a reasonable choice. Once the speed synchronization phase is finished, the second phase "Dog clutch engagement" is started. If the speed is matched perfectly there will be minimum noise and wear in the transmission.

The speed difference $\omega_{diff}$ is defined as

$$\omega_{diff} = \omega_p - \omega_s \tag{3}$$

To minimize noise and wear $\omega_{diff}$ must be within certain limits before the dog clutch is engaged, as discussed in later sections of this disclosure.

After dog clutch engagement the torque at the wheels 3 will be the sum of the torque from ICE 5, and first and second electric machines P1, P2. To keep a smooth acceleration of the vehicle during the driving mode shift, it may be desirable to manage the torque from all sources such that the toque demand for constant acceleration is fulfilled during the whole driving mode shift.

From the above section it can be concluded that the first phase in the driving mode switch i.e. speed synchronization is not time critical. Depending on the power available for the first electric machine P1 for speed synchronization, synchronization time $t_{synch}$ will change, hence changing the speed $v_{init}$ when the speed synchronization should start. As opposed to transmissions in conventional powertrains, where driving mode switch and speed synchronization is a time critical problem for fulfilling the torque request, the controller design in this disclosure will be focused on speed synchronization and dog clutch engagement without noise and wear.

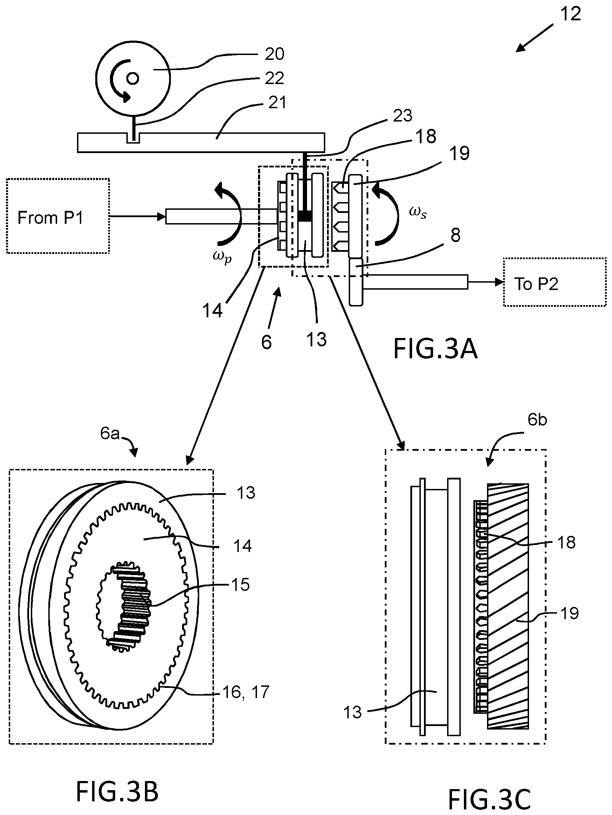

Figure 3A shows a schematic illustration of an example embodiment of an actuation mechanism 12 of the dog clutch 6. In this example embodiment, the primary side 6a of the dog clutch comprises a sleeve 13 and hub 14, and they are shown in an enlarged view in figure 3B. The hub 14 has outer axially extending dog teeth 16 that are connected to inner axially extending dog teeth 17 of the sleeve 13 for enabling axial motion of the sleeve 13 relative to the hub 14, which is rotationally fastened to the input shaft of the first electric machine P1 via a splines connection 15.

The disengaged side of the dog clutch 6 is shown in an enlarged view in figure 3C, and the secondary side 6b of the dog clutch 6 comprises outer dog teeth 18 configured for engaging the inner dog teeth 17 of the sleeve 13, when the sleeve 13 is axially displaced towards the secondary side of the dog clutch 6, during engagement of the dog clutch 6. The second electric machine P2 is connected to the secondary side of the dog clutch 6 via the transmission 8, as shown in figure 3A and 3C.

With reference to figure 3A, axial displacement of the sleeve 13 towards and away from secondary side of the dog clutch 6, for setting the dog clutch 6 in engaged or disengaged state, is for example performed by means of an electric shifter motor that drives a linearly moveable shifter rail 21. The rotational to linear motion conversion between shifter motor to shifter rail may for example be accomplished by a shift finger 22. Moreover, axial displacement of the sleeve 13 may be accomplished by means of a shift fork 23 that is fastened to the shifter rail 21 and engages the sleeve 13.

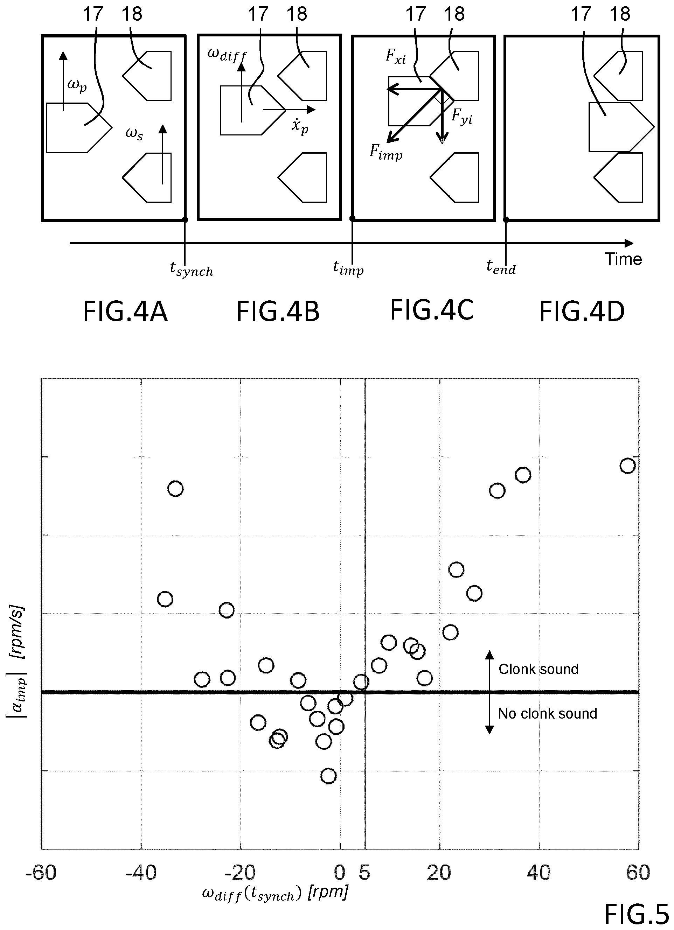

Figure 4A-4D show the forces and velocities involved on primary and secondary dog teeth, during the engagement process, wherein figure 4A shows a disengaged dog clutch, figure 4B shows the dog clutch while moving towards engagement, figure 4C shows the dog clutch upon dog teeth impact, and figure 4D shows the dog clutch in engaged state.

Figure 4A shows the relative position of the dog teeth of a disengaged dog clutch at the end of speed synchronization phase. Primary dog teeth, i.e. dog teeth 17 of sleeve 13, are moving with a rotational speed $\omega_p$ and secondary side dog teeth, i.e. dog teeth 18 of secondary side 6b, are moving with rotational speed $\omega_s$.

When the shifter motor 20 is rotated in the shift direction shown by rotational arrow in Figure 3A, the shift fork 23 will move the sleeve 13 with an axial velocity $\dot{x}_p$ as shown in Figure 4B. The rotational speed difference can be simplified by assuming that the secondary teeth 18 are at rest and the primary teeth 17 are rotating with the speed difference $\omega_{diff}$ defined by equation 3.

Since the primary side speed $\omega_p$ is being controlled by the feedback controller and $\omega_s$ is proportional to the vehicle speed, it can be assumed that, for the short time instance of the engaging phase, $\omega_{diff}$ will be constant.

When the primary dog teeth 17 have moved a certain distance at time $t_{imp}$, they will come into contact with the secondary dog teeth 18 as shown in figure 4C. Depending on the axial speed $\dot{x}_p$ and the rotational speed difference $\omega_{diff}$ at $t_{imp}$, an impact force $F_{imp}$, normal to the impact surface, will be generated on both teeth. The impact force will be directly proportional to $\omega_{diff}(t_{imp})$ and $\dot{x}_p$ and is responsible for noise and wear.

The axial component $F_{xi}$ of the impact force $F_{imp}$ shown in figure 4C will resist the engagement and is overcome by the shifter motor 21 shown in figure 3A. Once the primary dog teeth 17 have moved a certain distance and are engaged with the secondary dog teeth 18, at time $t_{end}$, the third phase of the driving mode shift can be started, namely the "Torque Ramp up" phase.

At time $t_{imp}$, when the dog teeth 17, 18 collide, the tangential component of the impact force $F_{yi}$ will affect the rotational velocities $\omega_p$ and $\omega_s$ of the dog teeth. The effect can be measured by angular acceleration $\alpha_{imp}$ of the teeth. $\alpha_{imp}$ at impact can be defined by:

$$\alpha_{imp} = constant\ F_{yi} \qquad\qquad (4)$$

The maximum value of the acceleration $\alpha_{imp}$ will be at the time instance $t_{imp}$ and is denoted by $\lceil \alpha_{imp} \rceil$.

During normal operation of the vehicle, $\omega_{diff}(t_{synch})$ must be very close to zero before the dog clutch engagement. Lab tests were done by engaging the dog clutch at different values of $\omega_{diff}(t_{synch})$ and measuring the maximum instantaneous angular acceleration and the noise from the dog clutch. The results are shown in figure 5.

It can be seen from figure 5, that if $\alpha_{imp}$ is higher than a particular value clonk sound is heard during engagement. As shown in equation 4 a higher $\alpha_{imp}$ means a higher impact force $F_{imp}$. Higher impact force $F_{imp}$ is in turn a result of a higher $\omega_{diff}$. From figure 5, it can be seen that if $\omega_{diff}(t_{synch})$ is between -20 and 5 rpm there will most probably be no clonk sound.

During the lab tests shown in figure 5, the primary side speed $\omega_p$ is not controlled, so from time instance $t_{synch}$ to $t_{end}$ the rotational speed difference $\omega_{diff}$ is not constant due to drag torque in the transmission.

Ideally, the pattern of points in figure 5, should be centred around zero $\omega_{diff}$, as $\alpha_{imp}$ is a function of absolute value of $\omega_{diff}$.

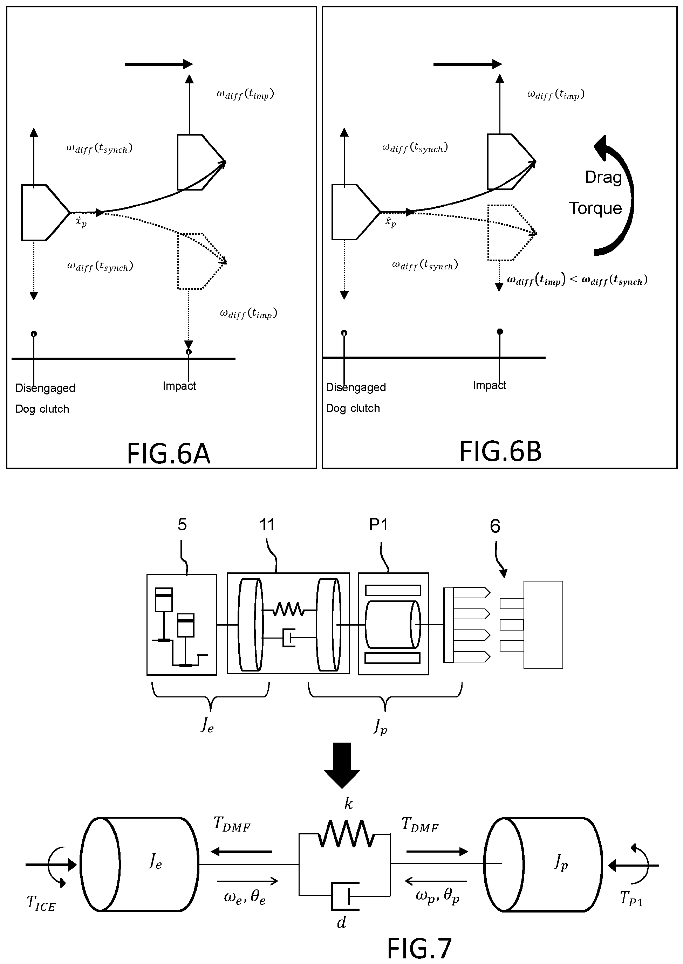

Figure 6A and 6B shows the axial movement of the primary dog without and with drag torque, respectively. As shown in figure 6A, if there is no drag torque in the transmission, then $\omega_{diff}(t_{synch})$ will be equal to $\omega_{diff}(t_{imp})$, so the impact force would be the same irrespective of the direction of $\omega_{diff}$. Figure 6B on the other hand shows the impact of drag torque, wherein drag torque on either primary or secondary side can be represented by the directional drag torque.

The effect of directional drag torque will be different depending on the direction of $\omega_{diff}$. For the drag torque shown in figure 6B, it can be seen that $\omega_{diff}(t_{imp})$ is less than $\omega_{diff}(t_{synch})$, if $\omega_{diff}$ is in downwards direction resulting in lower $F_{imp}$ and $\alpha_{imp}$ than if $\omega_{diff}$ is in upwards direction. Consequently the noise produced by the impact will be lower if $\omega_{diff}$ is in downwards direction.

For this disclosure based on figure 5 and figure 6A-B, it can be safely assumed that

$$\left| \omega_{diff}(t_{synch}) \right| < 5\ rpm \xrightarrow[results]{} No\ Clonk \qquad\qquad (5)$$

To control the primary speed $\omega_p$ to right value before the dog clutch 6 can be engaged, toque control of the first electric machine P1 is used. However, due to the dual mass flywheel 11 and the time variations of the engine torque, this is not a trivial control task. To ensure a fast, accurate and robust control of the primary speed, a controller is designed in the following section.

The components on the primary side of the dog clutch can be represented by a 2 Degree-Of-Freedom (DOF) torsional system as schematically shown in figure 7.

The torque from the ICE 5 acts on one side of the dual mass flywheel 11, and the torque of the first electric machine P1 on the other side of the dual mass flywheel 11. In between are several inertias, which can be lumped together into two inertias connected via a torsional spring and damper. The two inertias are

$$J_p = J_{Hub\&Sleeve} + J_{P1\,rotor} + J_{DMF\,secondary}$$

$$J_e = J_{crankshaft} + J_{Flywheel} + J_{DMF\,primary} \tag{6}$$

The torque $T_{DMF}$ applied by the torsional spring and damper of the DMF on both the inertias $J_p$ and $J_e$ is

$$T_{DMF} = d\left(\omega_p - \omega_e\right) + k\left(\theta_p - \theta_e\right) \tag{7}$$

Defining $\Delta\theta$, such that

$$\Delta\theta = \theta_p - \theta_e \tag{8}$$

Applying Newton's 2nd law on inertia $J_p$ and $J_e$ a set of two differential equations describing the speed dynamics of the system are obtained:

$$J_p\dot{\omega}_p = -d\omega_p - k\Delta\theta + d\omega_e + T_{P1}$$

$$J_e\dot{\omega}_e = d\omega_p + k\Delta\theta - d\omega_e - T_{ICE} \tag{9}$$

Differentiating equation 8 on both sides gives

$$\Delta\dot{\theta} = \omega_p - \omega_e \tag{10}$$

Combing the differential equations in equations 9 and 10 the linear time invariant state space model of the mechanical system in figure 7 can be obtained by setting the disturbance $T_{ICE} = 0$, such that

$$\dot{x} = Ax + Bu$$

$$y = Cx \tag{11}$$

where state vector x is

$$x = [\omega_p \quad \Delta\theta \quad \omega_e]^T \tag{12}$$

and

$$A = \begin{bmatrix} -d/J_p & -k/J_p & d/J_p \\ 1 & 0 & -1 \\ d/J_e & k/J_e & -d/J_e \end{bmatrix} = \begin{bmatrix} -a_1 & -a_3 & a_1 \\ 1 & 0 & -1 \\ a_2 & a_4 & -a_2 \end{bmatrix} \tag{13}$$

$$B = [1/J_p \quad 0 \quad 0]^T = [b \quad 0 \quad 0]^T \tag{14}$$

The constants $a_1$ to $a_4$ in equation 13 and constant b in equation 14 are positive numbers and depend on the physical constants of the system.

Vector C in equation 11 will be

$$C = \begin{bmatrix} 1 & 0 & 0 \end{bmatrix} \tag{15}$$

since only the first state $\omega_p$ i.e. the primary side dog teeth speed is to be controlled during speed synchronization.

For synchronizing the speed of the primary side of the dog clutch the input u to the system will be the torque request from the first electric machine P1 so

$$u = T_{P1} \tag{16}$$

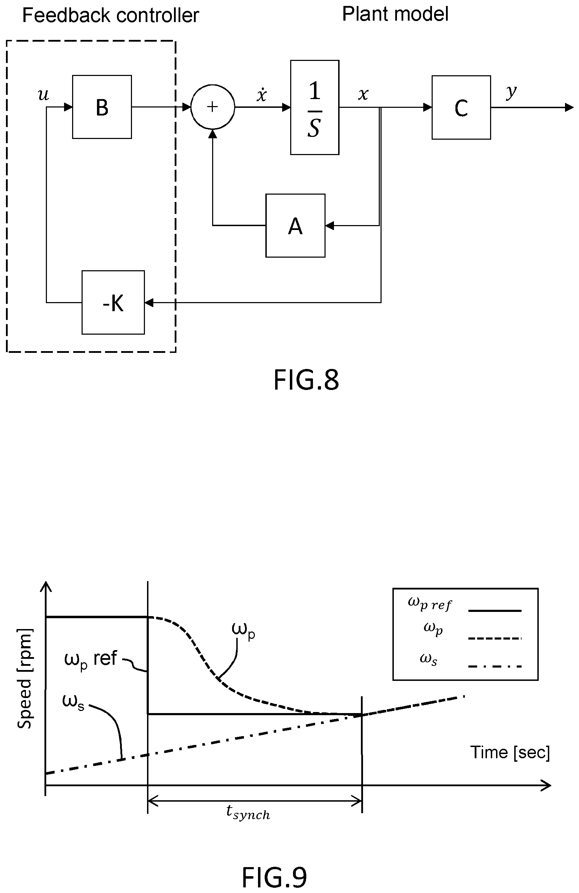

A linear state feedback controller is chosen because it can be easily implemented in the existing transmission control software. In figure 8 the plant model is shown on the right side with state feedback controller on the left side indicated by a dashed line, where K is the linear state feedback gain.

From figure 8, the torque request on the first electric machine P1 in equation 16 can be rewritten as

$$u = -Kx \tag{17}$$

In order to minimize the speed difference $\omega_{diff}$ in equation 3 under the disturbance from $T_{ICE}$, the first state of the system in equation 12 $\omega_p$, needs to reach the target speed shown by $\omega_{p\,ref}$ as shown in figure 9.

From figure 9, it can be seen that at time $t_{synch}$, $\omega_{p\,ref}$ is equal to $\omega_s$, so if $\omega_p$ reaches $\omega_{p\,ref}$ after time $t_{synch}$, dog clutch can be engaged without noise. To analyze the control of the speed an error $\varepsilon$ can be introduced

$$\varepsilon = \omega_{p\,ref} - \omega_p \tag{18}$$

Adding the integral of the error $\varepsilon$ in the system (11) as an additional state, an integral action of the feedback control is obtained which will eliminate the steady state error. With this new state the augmented state space model will be

$$\begin{bmatrix} \dot{x} \\ \varepsilon \end{bmatrix} = A_{aug}x + B_{aug}u + \begin{bmatrix} 0 \\ 1 \end{bmatrix} \omega_{p\,ref}$$

$$y = C_{aug} \begin{bmatrix} x \\ \varepsilon \end{bmatrix} \tag{19}$$

where

$$A_{aug} = \begin{bmatrix} A & 0 \\ -C & 0 \end{bmatrix}, B_{aug} = \begin{bmatrix} B & 0 \end{bmatrix}^T, C_{aug} = \begin{bmatrix} C & 0 \end{bmatrix} \tag{20}$$

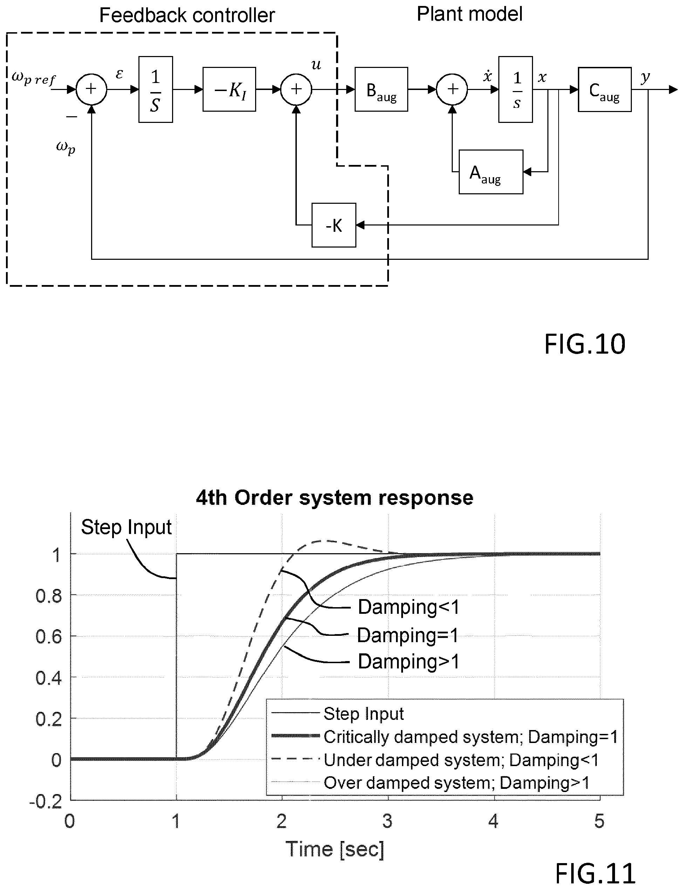

The feedback control system in figure 8 updated with the integral state and reference $\omega_{p\,ref}$ is shown in figure 10. Figure 10 this describes a reference tracking integral control system.

From figure 10, the torque request u on the first electric machine P1 can be rewritten as

$$u = -Kx - K_I \int_0^t \varepsilon \, . \, dt \tag{21}$$

The state feedback can be selected in many ways, but generally it is desirable to find a controller gain that is optimal regarding some criteria. One way to find an optimal feedback control law for equation 21 can be obtained by solving infinite time linear quadratic problem, which results in a LQI control. This type of controller outputs the control input $u$ that minimizes the criteria $J$ where

$$J = \int_0^\infty \begin{bmatrix} x^T & \varepsilon \end{bmatrix} Q \begin{bmatrix} x^T & \varepsilon \end{bmatrix} + u^T r u \tag{22}$$

By using this method the resulting controller will be robust and inherently stable.

Matrix Q and scalar r in equation 22 can be defined as

$$Q = \begin{bmatrix} q_1 & 0 & 0 & 0 \\ 0 & q_2 & 0 & 0 \\ 0 & 0 & q_3 & 0 \\ 0 & 0 & 0 & q_4 \end{bmatrix}, \text{ wherein } r > 0 \qquad (23)$$

The elements of matrix Q and r, define the weights on states and control input in the criteria to be minimized (22). When determining the LQI controller gain, the absolute values of Q and r are not important. Rather, it is their relative values which determines the feedback gain of the controller. A relative high value on $q_4$ for instance means that keeping the integral error $\varepsilon$ small, is more important than keeping the other states or the control effort small. A very high value on r means that it is more important to keep the control effort u small, than to keep the state errors small.

The feedback gains $K$ and $K_I$ in equation 21 can, for an LQI controller, be calculated by

$$[K \quad K_I] = r^{-1}B_{aug}^T P \qquad (24)$$

where P is the solution to the Algebraic Riccati equation i.e.

$$P A_{aug} + A_{aug}^T P - P B_{aug} r^{-1} B_{aug}^T P + Q = 0 \qquad (25)$$

and is a symmetric matrix of the form

$$P = \begin{bmatrix} p_{11} & p_{12} & p_{13} & p_{14} \\ p_{12} & p_{22} & p_{23} & p_{24} \\ p_{13} & p_{23} & p_{33} & p_{34} \\ p_{14} & p_{24} & p_{34} & p_{44} \end{bmatrix} \qquad (26)$$

The values of Q and r in equation 22 may for example be found experimentally, or being calculated based on characteristic equations of the closed loop system. But the characteristic equation has up to now always been based on the controllable canonical form of the system instead of the augmented system shown in equation 19.

It is desirable to be able to calculate the new feedback gains directly based on physical system parameters, because this enables a quick and simply calibration of the LQI controller, without need for extensive processing power. To keep the values of feedback gains in equation 24 dependent on the physical parameters of the system, the A, B and C matrices are not transformed to the controllable canonical form, because this would require inserting values of the physical parameters of the system at an early stage.

The core idea of the method for controller calibration in the following sections of this disclosure is to

- Minimize the need for manual tuning
- Be based on physical properties of the system and functional requirements so it can be used on any size and version of the transmission without needing to change anything other than parameter values
- Guaranteed stability
- Low steady state error
- Noise rejection

The characteristic equation of the closed loop system in figure 10 can be written as

$$\det\left(sI - A_{aug} + B_{aug}K\right) = 0 \qquad (27)$$

Substituting K from equation 24 in equation 27

$$\det\left(sI - A_{aug} + B_{aug}r^{-1}B_{aug}^T P\right) = 0 \qquad (28)$$

Roots of equation 28 define the poles of the closed loop system and hence define time response of the system. The system in equation 19 is a fourth order system, so four poles need to be decided. Once the poles of the system are decided, the solution P to algebraic Riccati equation can be calculated and then feedback gains in equation 24 will be calculated.

The transfer function of a 4th order system is

$$G(s) = \frac{w_n^2}{s^4 + 4\xi w_n s^3 + w_n^2(2 + 4\xi^2)s^2 + 4\xi w_n^3 s + w_n^4} \tag{29}$$

where $w_n$ is the natural frequency and $\zeta$ is the damping ratio.

Figure 11 shows the response of a fourth order system with fixed natural frequency $w_n$ and variable damping ratios $\zeta$.

From figure 11, it can be seen that the critically damped response reaches the steady state value in the least time. The under damped response is faster to reach the desired speed but does not stay there and continues and produces an overshoot. Since in this disclosure the control problem deals with speed synchronization, an overshoot will create NVH issues so, a critically damped system is chosen.

With $\xi = 1$, and *input(s)* being a unit step the transfer function in equation 29 becomes

$$output(s) = \frac{1}{s} \frac{w_n^2}{s^4 + 4w_n s^3 + 6w_n^2 s^2 + 4w_n^3 s + w_n^4} \tag{30}$$

Using partial fractions equation 30 becomes

$$output(s) = \frac{1}{s} - \frac{1}{s + w_n} - \frac{w_n}{(s + w_n)^2} - \frac{w_n^2}{(s + w_n)^3} - \frac{w_n^3}{(s + w_n)^4} \tag{31}$$

Taking Laplace inverse on both sides of equation 31

$$output(t) = 1 - e^{-w_n t}\left(1 + w_n t + \frac{w_n^2 t^2}{2} + \frac{w_n^3 t^3}{3}\right) \tag{32}$$

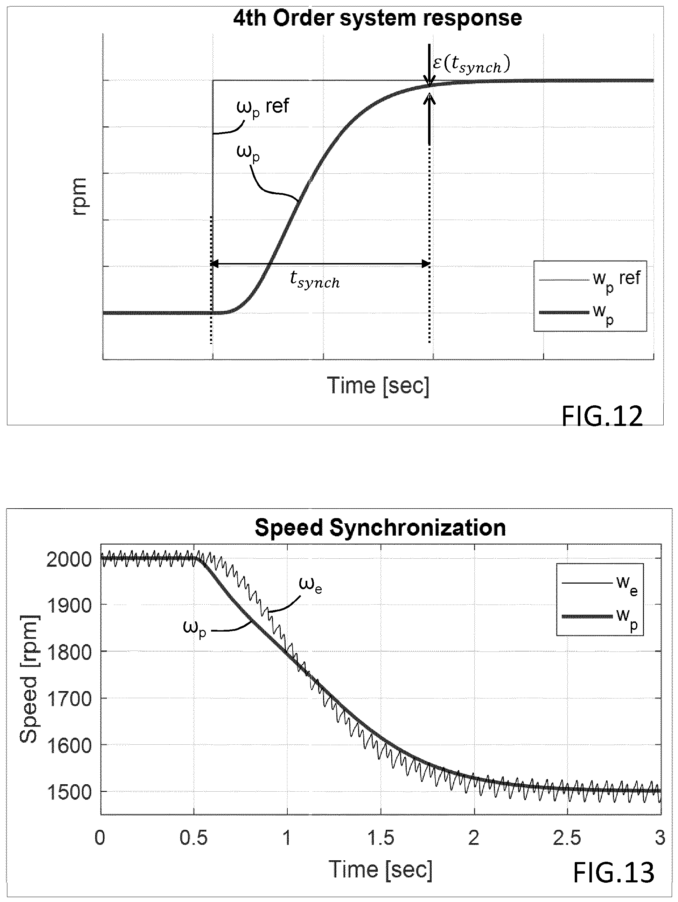

Equation 32 can be solved by using figure 12, which shows the step response of a critically damped fourth order system.

In figure 12, if step input is $\omega_{p\,ref}$ from figure 9, the output will be $\omega_p$. The error $\varepsilon$ in equation 18 can be used with equation 5 to define error $\varepsilon(t_{synch})$. If $\varepsilon(t_{synch})$ is within the limits defined in equation 5, the dog clutch can be engaged without noise after time $t_{synch}$.

Equation 32, represents the evolution of *output* or $\omega_p$ with time. The requirement on $\omega_p$ is such that after time $t_{synch}$ it should reach $\omega_s(t_{synch})$ within error bounds defined by equation 5. So equation 32 can be rewritten as

$$\frac{limits\ of\ \omega_{diff}}{\omega_s(t_{synch})} = e^{-w_n t_{synch}}\left(1 + w_n t_{synch} + \frac{w_n^2 t_{synch}^2}{2} + \frac{w_n^3 t_{synch}^3}{3}\right) \tag{33}$$

Since equation 33 has one unknown $w_n$ it can be solved, and the solution will be of the form

$$w_n = constant/t_{synch} \tag{34}$$

Equation 34 represents the location of four poles of the transfer function in equation 29, wherein all four poles are located in the same location.

In this step value of $w_n$ from equation 34 will be used in denominator polynomial of transfer function in 29 to determine the elements in the P matrix.

By comparing the coefficients for $s^3$, $s^2$, $s$ and the constant term in equation 28 with denominator polynomial of equation 29, the following equation set is obtained, wherein $p_{11}, p_{12}, p_{13}$ and $p_{14}$ are unknowns that must be calculated:

$$a_1 + a_2 + p_{11} * \frac{b^2}{r} = 4\xi w_n$$

$$\frac{b^2}{r} * p_{12} - \frac{b^2}{r} * p_{14} + a_2 * \frac{b^2}{r} * p_{11} + a_2 * \frac{b^2}{r} * p_{13} + a_3 + a_4 = w_n^2(2 + 4\xi^2)$$

$$a_4 * \frac{b^2}{r} * p_{11} - a_2 * \frac{b^2}{r} * p_{14} + a_4 * \frac{b^2}{r} * p_{13} = 4\xi w_n^3$$

$$-a_4 * \frac{b^2}{r} * p_{14} = w_n^4 \qquad\qquad (35)$$

The constants $a_1$ to $a_4$ in equation 13 and constant b in equation 14 are positive numbers and depend on the physical constants of the system.

Since equation set 35 has four unknowns $p_{11}$, $p_{12}$, $p_{13}$ and $p_{14}$ and four equations, a unique solution of each of said unknowns can be calculated by setting $\xi = 1$ and setting r an arbitrary positive number, such as for example 1.

Specifically, $p_{11}$ is directly calculable based on the first line of equation 35, and $p_{14}$ is directly calculable based on the last line of equation 35. Thereafter, $p_{13}$ is directly calculable based on the third line of equation 35, and finally $p_{12}$ is directly calculable based on the second line of equation 35.

After solving equation set 35, there will be six remaining unknown elements left in the P matrix in equation 26, also the four elements of the Q matrix in equation 23 need to be calculated. This requires 10 equations that can be obtained from matrix equation 25, wherein the terms $p_{22}$, $p_{23}$, $p_{24}$, $p_{33}$, $p_{34}$ and $p_{44}$ of the P matrix and $q_1$, $q_2$, $q_3$ and $q_4$ of the Q matrix are the unknowns that must be calculated:

$$2p_{12} - 2p_{14} + q_1 - 2a_1 p_{11} + 2a_2 p_{13} - \frac{b^2 p_{11}^2}{r} = 0$$

$$p_{22} - p_{24} - a_1 p_{12} - a_3 p_{11} + a_4 p_{13} + a_2 p_{23} - \frac{b^2 p_{11} p_{12}}{r} = 0$$

$$p_{23} - p_{12} - p_{34} + a_1 p_{11} - a_1 p_{13} - a_2 p_{13} + a_2 p_{33} - \frac{b^2 p_{11} * p_{13}}{r} = 0$$

$$p_{24} - p_{44} - a_1 p_{14} + a_2 p_{34} - \frac{b^2 p_{11} p_{14}}{r} = 0$$

$$q_2 - 2a_3 p_{12} + 2 a_4 p_{23} - \frac{b^2 p_{12}^2}{r} = 0$$

$$a_1 p_{12} - p_{22} - a_3 p_{13} - a_2 p_{23} + a_4 p_{33} - \frac{b^2 p_{12} p_{13}}{r} = 0$$

$$a_4 p_{34} - a_3 p_{14} - \frac{b^2 p_{12} p_{14}}{r} = 0$$

$$q_3 - 2p_{23} + 2a_1 p_{13} - 2a_2 p_{33} - \frac{b^2 p_{13}^2}{r} = 0$$

$$a_1 p_{14} - p_{24} - a_2 p_{34} - \frac{b^2 p_{13} p_{14}}{r} = 0$$

$$q_4 - \frac{b^2 p_{14}^2}{r} = 0 \qquad\qquad (36)$$

Similar to above, this equation set 36 is solved by first calculating the equations having the least variables. For example, $q_1$ is directly calculable based on the first line of equation set 36, $q_4$ is directly calculable based on the last line of equation 36, and $p_{34}$ is directly calculable based on the seventh line of equation set 36, based on the previous calculation of $p_{11}$, $p_{12}$, $p_{13}$, $p_{14}$.

Thereafter, terms $p_{22}$, $p_{23}$, $p_{24}$, $p_{33}$, $p_{34}$, $q_2$ and $q_3$ may be solved using conventional matrix calculating, such as for example by eliminating of variables by substituting certain variables, so that a only single equation with a single unknown variable remain, thereby enabling calculation of said unknown variable. Thereafter, the value of this calculated variable may inserted into other equations for calculating the remaining variables.

After solving equation set 36, the six remaining elements of P matrix that were $p_{22}, p_{23}, p_{24}, p_{33}, p_{34}$ and $p_{44}$ have been calculated along with the four elements of matrix Q, which are $q_1, q_2, q_3$ and $q_4$.

Once solution P to the Riccati equation in equation 26 is calculated the linear feedback gains $K$ and $K_I$ can be calculated by equation 24, wherein the variable r is set to the previously chosen arbitrary positive number, hence concluding the controller design.

To summarize, the control design process feedback gains $K$ and $K_I$ depend on determining the P matrix based on an arbitrarily chosen positive r as shown in equation 24.

Since P is a symmetric matrix as shown in equation 26, it has 10 unknowns instead of 16 unknowns for a non-symmetric matrix. The first row/column of P can be calculated by comparing the characteristic polynomial of the closed loop system in 28 with denominator of a fourth order transfer function in 35.

The denominator can be solved by solving equation 32 for a chosen point in figure 12.

The rest of the elements in P and diagonal matrix Q can then be solved using Riccati equation.

It is worth noting that the controller design process described in this disclosure will also work if matrix Q is not in diagonal form as shown in equation 22. If for instance Q matrix is in a form similar to the one of equation set 36 will be updated accordingly and the system will still have a unique solution if the number of elements in matrix $Q$ are four.

The resulting controller will be stable since it's a LQI feedback controller having a damping ratio $\xi$ set to a positive value, and the integral action guarantees low steady state error. Since the poles are chosen for a critically damped system, the response will reach desired value in short time without overshoot, thereby avoiding need to generate torque from the first electric machine P1 with changing polarity.

Substituting value of $p_{14}$ in the last equation of equation set 36 from last equation of equation set 35 following equation is obtained:

$$\frac{q_4}{r} = \frac{w_n^8}{a_4^2 b^2} \qquad\qquad (37)$$

Equation 37 shows the relative value between the said arbitrary selected positive weight r on input $u$ and the weight $q_4$ on the integral error as defined by equation 22 and 23. It can be seen from equation 37 that the relative value depends on $a_4$ and $b$, which are physical parameters of the system as defined by equations 13 and 14 and $w_n$ which depends on the desired performance of the system and is derived by functional requirements as shown in equation 33.

Hence, to fulfil the functional requirements for a particular physical system the relative weighting between $q_4$ and r must be as defined by equation 37.

It can also be shown that the other weights $q_1, q_2$ and $q_3$ relative to r, will also solely depend on physical parameters in matrices $A$ and $B$ from equations 13 and 14 and functional requirements defined using figure 12.

So, the LQI control implementation approach described in this disclosure gives controller formulation in terms of physical parameters and functional requirements, hence eliminating the need for large number of controller simulation to tune the controller for desired responses. This will save a lot of transmission calibration work, and also eliminate the risk for errors in the calibration process.

To demonstrate the performance of a controller designed with the presented method, simulations on a 2DOF torsional system representing ICE, dual mass flywheel and first electric machine P1 was performed.

Figure 13 shows the angular velocities $\omega_p$ and $\omega_e$ during speed synchronization.

From figure 12, when the vehicle speed is lower than $v_{init}$ the ICE 5 and primary side of dog clutch 6a are running at 2000 rpm. At 0.5 seconds in figure 13, when the vehicle speed becomes larger than $v_{init}$ the speed synchronization starts and primary side speed drops to 1500 rpm within 2 seconds, which is time $t_{synch}$ as defined by equation 2.

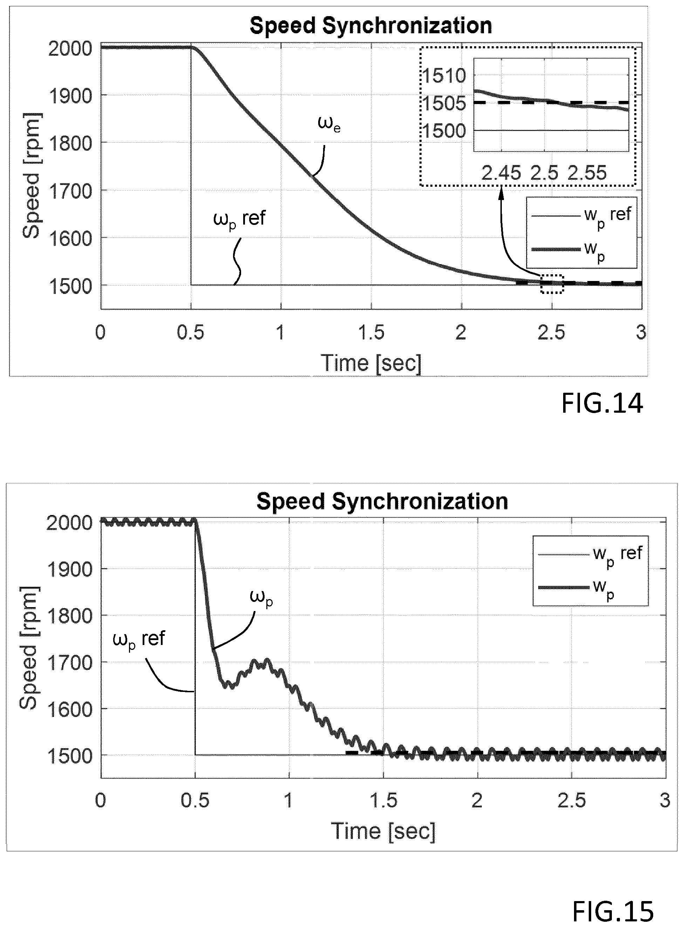

Figure 14 shows the control of primary side speed $\omega_p$ with the target speed $\omega_{ref}$. The zoomed in view shown by the dotted box shows that $\varepsilon$ after time $t_{synch}$ is less than 5 rpm so according to equation 5 the following dog clutch engagement will be without clonk noise.

If the functional requirement of $t_{synch}$ is changed from 2 sec from equation 2 to 1 sec, and the controller is redesigned, the new controller's performance is shown in figure 15.

From figure 15, it can be seen that the synchronization time requirement of 1 sec is fulfilled but the error after time $t_{synch}$ is not within the limits defined by equation 5.

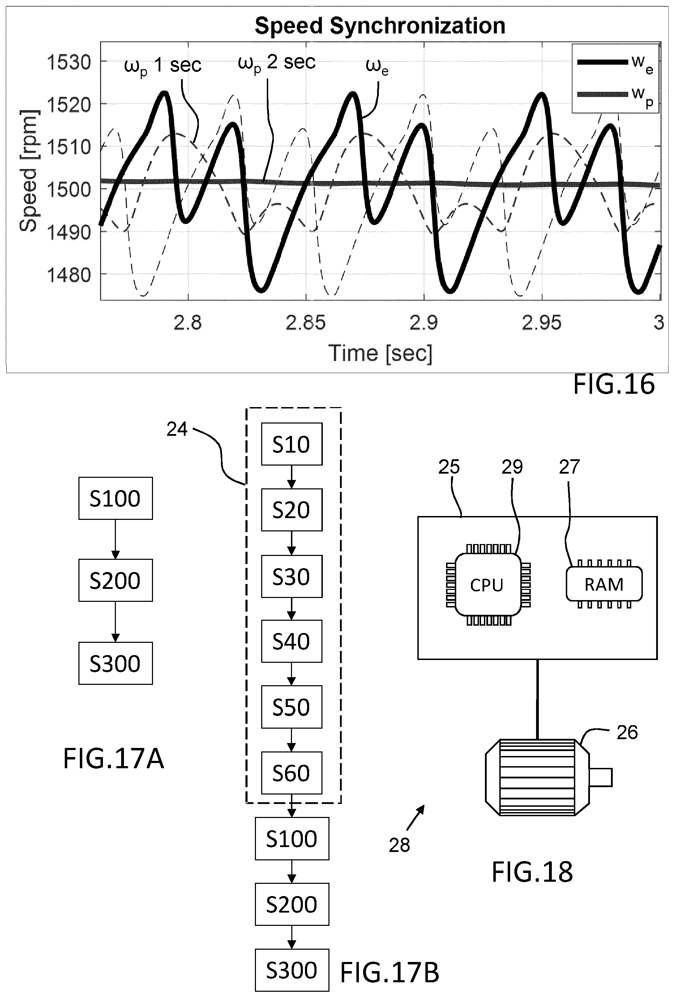

The reason can be seen by investigating the resulting magnitude of $q_2$ in equation 23, which from equations 22 and 12 is the weight defined for the state $\Delta\theta$ of the system. A high value of $q_2$ implies that $\Delta\theta$ should be very small. A very small $\Delta\theta$ according to equation 8 means that the vibration isolation between engine and the primary side of dog clutch will be poor. This can be seen by comparing the magnitudes of fluctuations in $\omega_p$ for controller designed for $t_{synch}$ equal to 1 second shown by thin dotted line marked "$\omega_p$ 1 sec" in figure 16 and $\omega_p$ for $t_{synch}$ equal to 2 seconds shown by thick line marked with "$\omega_p$ 2 sec" in figure 16.

Figure 16 shows vibration isolation for controllers with different functional requirements with thick dotted lines for $t_{synch}$ = 2 sec and thin dashed lines for $t_{synch}$ = 1 sec.

From figure 16, it can be seen that fluctuations in $\omega_e$ under the influence of the disturbance $T_{ICE}$ is same for both controllers.

For the controller designed using the approach described the value of $q_2$ for $t_{synch}$ = 1 *sec* is 170 times more than that for $t_{synch}$ = 2 *sec* and hence the poor vibration isolation and unfulfillment of error after time $t_{synch}$ in figure 15 as compared to figure 14.

For the particular problem of speed synchronization in the hybrid powertrain described in this example embodiment of the disclosure, it is not an issue that the synchronization time is long because the speed synchronization is not time critical. So by decreasing $v_{init}$ in figure 2, the $t_{synch}$ can be increased according to equation 1 to a level where the noise requirement is fulfilled e.g. $t_{synch}$ being equal to 2sec.

Alternatively a non-diagonal form of Q in equation 23 can be calculated by a iterative method using desired close loop poles. The desired closed loop poles can be obtained from the method explained above.

The calibration method and corresponding dynamic physical system of the present disclosure have been described above in detail with reference to figures 1A-16 and in the context of the specific implementation of controlling clutch engagement process of a dog clutch. However, as mentioned earlier in the text, the calibration method and corresponding dynamic physical system of the present disclosure is not restricted to this example embodiment but may be advantageously used also in other technical implementations having a controller for controlling a controllable device.

Consequently, with reference to figure 17A, the present disclosure relates to a general method for calibrating the feedback gains **K** of an LQI controller implemented in an electronic control unit operatively connected for controlling operation of a physical electric or electro-mechanical device of a dynamic physical system, in particular a vehicle power train, wherein the LQI controller is based on an augmented State Space model having the following form:

$$\begin{bmatrix} \dot{x} \\ \varepsilon \end{bmatrix} = \boldsymbol{A}_{aug} x + \boldsymbol{B}_{aug} u + \begin{bmatrix} 0 \\ 1 \end{bmatrix} ref$$

$$y = \boldsymbol{C}_{aug} \begin{bmatrix} x \\ \varepsilon \end{bmatrix}$$

$$\boldsymbol{A}_{aug} = \begin{bmatrix} \boldsymbol{A} & 0 \\ -\boldsymbol{C} & 0 \end{bmatrix} , \boldsymbol{B}_{aug} = \begin{bmatrix} \boldsymbol{B} & 0 \end{bmatrix}^T , \boldsymbol{C}_{aug} = \begin{bmatrix} \boldsymbol{C} & 0 \end{bmatrix}$$

wherein the augmented State Space model is based on the following State Space model representing the physical system:

$$\dot{x} = \boldsymbol{A}x + \boldsymbol{B}u$$

$$y = \boldsymbol{C}x$$

where x is control system state vector, $\varepsilon$ is control system tracking error, u is control system input, *ref* is control system target references value, y is control system output, and **A, B, C** represent matrices derived from a mathematical model of the dynamic physical system, and wherein the method of calibrating the LQI controller comprises a first step S100 of obtaining values of various physical parameters of the dynamic system. The method further comprises a second step S200 of inserting the obtained values of the physical parameters into predetermined equations for calculating numerical values of the individual terms of a **P** matrix, wherein the **P** matrix is the solution to the Algebraic Riccati equation, and wherein said equations include the physical parameters of the system. Finally, the method comprises a third step S300 of calculating new feedback gains for the LQI controller based on the matrix equation $\boldsymbol{K} = r^{-1} \boldsymbol{B}_{aug}^T \boldsymbol{P}$, based on an arbitrarily chosen positive value of r, wherein the terms of the **K** matrix corresponds to the feedback gains.

Thereby, the LQI controller may be calibrated by simply applying the new feedback gains.

The physical parameters may be any type of parameters associated with a physical system, such as for example inertia, damping constant, spring constant, weight, friction, conductivity, viscosity, etc., depending on the type of system and controllable device.

Furthermore, the method may also include the step of calculating numerical values of the individual terms of a **B** matrix, because also the values of the terms of the **B** matrix is required for calculating the feedback gains.

In some example embodiments, the P matrix is a diagonal matrix having the following form:

$$P = \begin{bmatrix} p_{11} & p_{12} & \cdots & p_{1n} \\ p_{12} & p_{22} & \cdots & p_{2n} \\ \cdots & \cdots & \cdots & p_{3n} \\ p_{1n} & p_{2n} & \cdots & p_{nn} \end{bmatrix}.$$

In some example embodiments, each of the equations for calculating the terms of the **P** matrix is a function of not more than constants, obtainable physical parameters of the dynamic system, other terms of the **P** matrix, and terms of the **Q** matrix.

In some example embodiments, the physical parameters of the dynamic system are obtained by manually by a user that is measuring, detecting or estimating the values of the physical parameters of the dynamic system; and/or by the electronic control unit that automatically conducts measurements, detects or estimates the values of the physical parameters of the dynamic system.

In some example embodiments, the step of calculating feedback gains **K** for the LQI controller is free from matrix calculation involving a numerical representation of matrix A of the dynamic physical system.

In some example embodiments, the method further includes a setup phase of the LQI controller. The setup phase is generally performed in connection with designing of the LQI controller for the physical system, and this before said calibration of the feedback gains **K.** With reference to figure 17B, the setup phase may include a first step S10 of determining the terms of the matrices **A, B** and **C** in form of ones, zeros, and equations having physical constants of the system as expression, while omitting the step of transforming the matrices **A, B** and **C** to a controllable canonical form. A second step S20 of determining a feedback control system having an Integral Linear Quadratic (LQI) controller that outputs system input u that minimizes the criteria J where $J = \int_0^\infty [x^T \quad \varepsilon] Q [x^T \quad \varepsilon] + u^T r u$ , wherein Q is matrix and r is a scalar, and wherein the LQI feedback controller includes said feedback gains. The setup phase may further include a third step S30 of determining the characteristic equation of the control system, a fourth step S40 of determining the transfer function of the control system, a fifth step S50 of determining the location of the poles of the transfer function, and a sixth step S60 of deriving equations for the terms of each of the **Q** and **P** matrix using the Algebraic Riccati Equation:

$$PA_{aug} + A_{aug}^T P - PB_{aug} r^{-1} B_{aug}^T P + Q = 0 \cdot$$

Setting a matrix in a controllable canonical form means transforming for example the **A** matrix, such that the **A** matrix has each of the denominator coefficients of the transfer function of the closed loop system, i.e. the coefficients of the characteristic polynomial, showing up negated and in reverse order in the bottom row of the **A** matrix.

In some example embodiments, the characteristic equation of the closed loop control system has the following form: $\det(sI - A_{aug} + B_{aug} r^{-1} B_{aug}^T P) = 0 \cdot$

In some example embodiments, the equations for the terms of the **P** matrix are also derived based on the denominator of the transfer function in combination with the coefficients and constant terms of the characteristic polynomial of the closed loop system.

In some example embodiments, the method further comprises determining the location of the poles of the transfer function by Laplace-inverse-transforming the denominator of the transfer function and inputting the values of any point of a step response of the transfer function G(s), thereby enabling calculation of the natural frequency $w_n$, which gives the location of the poles of the transfer function.

In some example embodiments, the transfer function includes a damping ratio $\zeta$, and wherein the damping ratio $\zeta$ is selected to be equal to about 1.0, or exactly 1.0.

In some example embodiments, the **Q** matrix is a diagonal weight matrix having the following form:

$$Q = \begin{bmatrix} q_1 & \cdots & 0 \\ \vdots & \ddots & \vdots \\ 0 & \cdots & q_n \end{bmatrix}.$$

In some example embodiments, the step of omitting transformation of one or more of the matrices **A, B** and **C** to a controllable canonical form enables the terms of matrices **A, B** and **C** to retain their original expressions as functions of detectable system parameters, such that the equations for calculating the terms of the **P** matrix may be expressed in terms of as functions of detectable system parameters, thereby enabling computational-easy calculation of new feedback gains suitable for implementation in a low-computational system, such as in particular a vehicle system.

In addition, with reference to figure 18, the present disclosure also relates to a general dynamic physical system 28, in particular a vehicle power train, comprising a physical electric or electro-mechanical device 26, such as for example an electric motor, an actuator or the like. The dynamic physical system 28 further comprises an electronic control unit 25 operatively connected to the physical electric or electro-mechanical device 26, wherein the electronic control unit 25 comprises a CPU 29 suitable for executing a code for implementing a LQI controller configured for controlling operation of the physical electric or electro-mechanical device 26, wherein the LQI controller is based on an augmented State Space model representing the dynamic physical system, wherein the augmented State Space model may have the following form:

$$\begin{bmatrix} \dot{x} \\ \dot{\varepsilon} \end{bmatrix} = \boldsymbol{A}_{aug} x + \boldsymbol{B}_{aug} u + \begin{bmatrix} 0 \\ 1 \end{bmatrix} ref$$

$$y = \boldsymbol{C}_{aug} \begin{bmatrix} x \\ \varepsilon \end{bmatrix}$$

$$\boldsymbol{A}_{aug} = \begin{bmatrix} \boldsymbol{A} & 0 \\ -\boldsymbol{C} & 0 \end{bmatrix}, \boldsymbol{B}_{aug} = \begin{bmatrix} \boldsymbol{B} & 0 \end{bmatrix}^T, \boldsymbol{C}_{aug} = \begin{bmatrix} \boldsymbol{C} & 0 \end{bmatrix}$$

wherein the augmented State Space model is based on the following State Space model representing the physical system:

$$\dot{x} = \boldsymbol{A}x + \boldsymbol{B}u$$

$$y = \boldsymbol{C}x$$

wherein $x$ is control system state vector, $\varepsilon$ is control system tracking error, $u$ is control system input, *ref* is control system target references value, $y$ is control system output, and **A, B, C** represent matrices derived from a mathematical model of the dynamic physical system. The electronic control unit 25 further comprises a data memory 27 including predetermined equations for calculating numerical values of the individual terms of a **P** matrix, wherein the **P** matrix is the solution to the Algebraic Riccati equation, and wherein said equations include the physical parameters of the system. The feedback gains of the LQI controller is configured to be calibrated by: obtaining values of various physical parameters of the dynamic system; inserting the obtained values of the physical parameters into the predetermined equations for calculating numerical values of the individual terms of a **P** matrix; and calculating new feedback gains for the LQI controller based on the matrix equation $\boldsymbol{K} = r^{-1}\boldsymbol{B}_{aug}^{T}\boldsymbol{P}$, based on an arbitrarily chosen positive value of $r$, wherein the terms of the **K** matrix corresponds to the feedback gains.

In some example embodiments, the physical electric or electro-mechanical device 26 of the dynamic physical system is an actuator, a motor, a pump, a light or RF source, or an electro-dynamic device.

In some example embodiments, the dynamic physical system 28 is a vehicle system, specifically a vehicle power train system, and more specifically a vehicle power train system having a first electric machine P1 operatively connected to a first part 6a of a dog clutch 6, wherein the electronic controller 25 controls the rotational speed of the first part 6a of the dog clutch 6 for speed synchronising with a second part 6b of the dog clutch 6, such that the first and second dog clutch parts 6a, 6b can be shifted from disengaged state to engaged state in a smooth and noise-free manner.

In some example embodiments, the vehicle power train system is implemented in a hybrid electric vehicle having a combustion engine 5 drivingly connected to the first electric machine P1, and second electric machine P2 drivingly connected to the second part 6b of the dog clutch 6, and wherein shifting of the first and second dog clutch parts 6a, 6b from disengaged state to mutually engaged state results in switching from serial to parallel operation of the hybrid electric vehicle.

The disclosure also relates to a hybrid electric vehicle, wherein a shift of the first and second dog clutch parts from disengaged state to mutually engaged state is configured to switch operation of the hybrid electric vehicle from serial to parallel operation.

The present disclosure has been presented above with reference to specific embodiments. However, other embodiments than the above described are possible and within the scope of the disclosure. Different method steps than those described above, performing the method by hardware or software, may be provided within the scope of the disclosure.

The methods disclosed herein may be implemented in a general purpose computer, a processor, or a processor core. Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

The methods or flow charts provided herein may be implemented in a computer program, software, or firmware incorporated in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Thus, according to an exemplary embodiment, there is provided a non-transitory computer-readable storage medium storing one or more programs configured to be executed by one or more processors of the dynamic physical system 28 having the LQI controller, the one or more programs comprising instructions for performing the method according to any one of the above-discussed embodiments. Alternatively, according to another exemplary embodiment a cloud computing system can be configured to perform any of the method aspects presented herein. The cloud computing system may comprise distributed cloud computing resources that jointly perform the method aspects presented herein under control of one or more computer program products. Moreover, the processor may be connected to one or more communication interfaces and/or sensor interfaces for receiving and/transmitting data with external entities such as e.g. sensors arranged on the vehicle surface, an off-site server, or a cloud-based server.

The processor(s) of the dynamic physical system 28 may be or include any number of hardware components for conducting data or signal processing or for executing computer code stored in memory. The system may have an associated memory, and the memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

It will be appreciated that the above description is merely exemplary in nature and is not intended to limit the present disclosure, the invention being defined by the appended claims.

REFERENCE SIGNS

| | |
|---|---|
| 1. | Car |
| 2. | Propulsion power source |
| 3. | Wheels |
| 4. | Powertrain |
| 5. | Internal combustion engine |
| 6. | Dog clutch |
| 7. | Battery |
| 8. | Transmission |
| 9. | Charging flow |
| 10. | Discharging flow |
| 11. | Dual mass flywheel |
| 12. | Actuation mechanism |
| 13. | Sleeve |
| 14. | Hub |
| 15. | Splines connection |
| 16. | Dog teeth of hub |
| 17. | Dog teeth of sleeve |
| 18. | Dog teeth of secondary side |
| 19. | Transmission gear |
| 20. | Shifter motor |
| 21. | Shifter rail |
| 22. | Shift finger |
| 23. | Shift fork |
| 24. | Setup phase |
| 25. | Electronic control unit |
| 26. | Physical controllable device |
| 27. | Data memory |
| 28. | Physical system |
| 29. | CPU |
| P1. | First electric motor |
| P2. | Second electric motor |

**Claims**

1. A method for calibrating the feedback gains K of an LQI controller implemented in an electronic control unit (25) operatively connected for controlling operation of a physical electric or electro-mechanical device (26) of a dynamic physical system (28), wherein the LQI controller is based on an augmented State Space model having the following form:

$$\begin{bmatrix} \dot{x} \\ \varepsilon \end{bmatrix} = \boldsymbol{A}_{aug} x + \boldsymbol{B}_{aug} u + \begin{bmatrix} 0 \\ 1 \end{bmatrix} ref$$

$$y = \boldsymbol{C}_{aug} \begin{bmatrix} x \\ \varepsilon \end{bmatrix}$$

$$\boldsymbol{A}_{aug} = \begin{bmatrix} \boldsymbol{A} & 0 \\ -\boldsymbol{C} & 0 \end{bmatrix}, \boldsymbol{B}_{aug} = \begin{bmatrix} \boldsymbol{B} & 0 \end{bmatrix}^T, \boldsymbol{C}_{aug} = \begin{bmatrix} \boldsymbol{C} & 0 \end{bmatrix}$$

wherein the augmented State Space model is based on the following State Space model representing the physical system:

$$\dot{x} = \boldsymbol{A}x + \boldsymbol{B}u$$

$$y = \boldsymbol{C}x$$

wherein x is control system state vector, $\varepsilon$ is control system tracking error, $u$ is control system input, *ref* is control system target references value, $y$ is control system output, and A, B, C represent matrices derived from a mathematical model of the dynamic physical system,
wherein the method of calibrating the LQI controller comprises:
obtaining values of various physical parameters of the dynamic physical system (28);
inserting the obtained values of the physical parameters into predetermined equations for calculating numerical values of the individual terms of a P matrix, wherein the P matrix is the solution to the Algebraic Riccati equation, and wherein said equations include the physical parameters of the system (28) and functional requirements of the system; and

   calculating new feedback gains for the LQI controller based on the matrix equation $\boldsymbol{K} = r^{-1}\boldsymbol{B}_{aug}^T\boldsymbol{P}$, based on an arbitrarily chosen positive value of r, wherein the terms of the **K** matrix corresponds to the feedback gains.

2. The method according to claim 1, wherein each of the equations for calculating the terms of the **P** matrix is a function of not more than constants, obtainable physical parameters of the dynamic physical system (28), other terms of the P matrix, and terms of the **Q** matrix.

3. The method according to any of preceding claims 1 to 2, wherein the physical parameters of the dynamic system (28) are obtained:

   manually by a user that is measuring, detecting or estimating the values of the physical parameters of the dynamic system (28), and/or
   by the electronic control unit (25) that automatically conducts measurements, detects or estimates the values of the physical parameters of the dynamic system (28).

4. The method according to any of preceding claims 1 to 3, further comprising a setup phase of the LQI controller that is performed before said calibration of the feedback gains **K,** wherein the setup phase includes:

   determining the terms of the matrices **A, B** and **C** in form of ones, zeros, and equations having physical constants of the system as expression, while omitting the step of transforming the matrices **A, B** and **C** to a controllable canonical form,
   determining a feedback control system having an Integral Linear Quadratic (LQI) controller that outputs system input u that minimizes the criteria *J* where

$$J = \int_0^\infty [x^T \quad \varepsilon] Q [x^T \quad \varepsilon] + u^T r u$$

wherein $Q$ is matrix and r is a scalar, and wherein the LQI feedback controller includes said feedback gains, determining the characteristic equation of the control system,

determining the transfer function of the control system, and subsequently determining the location of the poles of the transfer function,

deriving equations for the terms of each of the Q and P matrix using the Algebraic Riccati Equation:

$$PA_{aug} + A_{aug}^T P - PB_{aug} r^{-1} B_{aug}^T P + Q = 0 \; .$$

5. The method according to claim 4, wherein equations for the terms of the P matrix are also derived based on the denominator of the transfer function in combination with the coefficients and constant terms of the characteristic polynomial of the closed loop system.

6. The method according to claim 5, further comprising determining the location of the poles of the transfer function by Laplace-inverse-transforming the denominator of the transfer function and inputting the values of any point of a step response of the transfer function G(s), thereby enabling calculation of the natural frequency $w_n$, which gives the location of the poles of the transfer function.

7. The method according to any of preceding claims 5 or 6, wherein the step of determining the location of the poles involves calculating the poles as a mathematical function of at least one predetermined performance requirement of the LQI controller.

8. The method according to any of preceding claims 4 to 7, wherein the step of omitting transformation of the matrices **A, B** and **C** to a controllable canonical form enables the terms of matrices **A, B** and **C** to retain their original expressions as functions of detectable system parameters, such that the equations for calculating the terms of the **P** matrix may be expressed in terms of as functions of detectable system parameters, thereby enabling computational-easy calculation of new feedback gains suitable for implementation in a low-computational system.

9. The method according to any of preceding claims 1 to 8, wherein the dynamic physical system (28) is a vehicle system, specifically a vehicle power train system, and more specifically a vehicle power train system having a first electric machine (P1) operatively connected to a first part (6a) of a dog clutch (6), wherein the electronic control unit (25) controls the rotational speed of the first part (6a) of the dog clutch (6) for speed synchronising with a second part (6b) of the dog clutch (6), such that the first and second dog clutch parts (6a, 6b) can be shifted from disengaged state to engaged state in a smooth and noise-free manner.

10. A dynamic physical system (28), comprising:

a physical electric or electro-mechanical device (26), and

an electronic control unit (25) operatively connected to the physical electric or electro-mechanical device (26), wherein the electronic control unit (25) comprises an LQI controller configured for controlling operation of the physical electric or electro-mechanical device (26), wherein the LQI controller is based on an augmented State Space model having the following form:

$$\begin{bmatrix} \dot{x} \\ \varepsilon \end{bmatrix} = A_{aug} x + B_{aug} u + \begin{bmatrix} 0 \\ 1 \end{bmatrix} ref$$

$$y = C_{aug} \begin{bmatrix} x \\ \varepsilon \end{bmatrix}$$

$$A_{aug} = \begin{bmatrix} A & 0 \\ -C & 0 \end{bmatrix}, \; B_{aug} = [B \quad 0]^T, \; C_{aug} = [C \quad 0]$$

wherein the augmented State Space model is based on the following State Space model representing the physical system (28):

$$\dot{x} = Ax + Bu$$

$$y = Cx$$

wherein x is control system state vector, $\varepsilon$ is control system tracking error, u is control system input, *ref* is control system target references value, y is control system output, and **A, B, C** represent matrices derived from a mathematical model of the dynamic physical system (28),

wherein the electronic control unit (25) further comprises a data memory (27) including predetermined equations for calculating numerical values of the individual terms of a **P** matrix, wherein the **P** matrix is the solution to the Algebraic Riccati equation, and wherein said equations include the physical parameters of the system (28) and functional requirements of the system,

wherein the feedback gains of the LQI controller is configured to be calibrated by:

obtaining values of various physical parameters of the dynamic system (28);
inserting the obtained values of the physical parameters into the predetermined equations for calculating numerical values of the individual terms of a **P** matrix; and

calculating new feedback gains for the LQI controller based on the matrix equation $K = r^{-1}B_{aug}^{T}P$ , based on an arbitrarily chosen positive value of r, wherein the terms of the **K** matrix corresponds to the feedback gains.

11. The dynamic physical system (28) according to claim 10, wherein each of the equations for calculating the terms of the **P** matrix is a function of not more than constants, obtainable physical parameters of the dynamic system (28), other terms of the **P** matrix, and terms of the **Q** matrix.

12. The dynamic physical system according to any of preceding claims 10 to 11,

wherein the data memory (27) further includes the terms of the matrices **A, B and C** in form of ones, zeros, and equations having physical constants of the system (28) as expression, wherein the matrices **A, B** and **C** have not been transformed into a controllable canonical form,
wherein the LQI controller is configured to output a control system input u that minimizes the criteria *J* where

$$J = \int_{0}^{\infty} [x^{T} \quad \varepsilon]Q [x^{T} \quad \varepsilon] + u^{T}ru$$

and where *Q* is matrix and r is a scalar,
wherein the equations for the terms of the **Q** matrix is stored in the data memory (27).

13. The dynamic physical system (28) according to any of preceding claims 10 to 12, wherein the matrices **A, B** and **C** stored in the data memory (27) have not been transformed into a controllable canonical form, and the terms of matrices **A, B** and **C** are therefore retained in their original expressions as functions of detectable system parameters, such that the equations for calculating the terms of the **P** matrix may be expressed in terms of as functions of detectable system parameters, thereby enabling computational-easy calculation of new feedback gains suitable for implementation in a low-computational system.

14. The dynamic physical system (28) according to any of preceding claims 10 to 13, wherein the dynamic physical system (28) is a vehicle power train system having a first electric machine (P1) operatively connected to a first part (6a) of a dog clutch (6), wherein the electronic control unit (25) is configured to control the rotational speed of the first part (6a) of the dog clutch (6) for speed synchronising with a second part (6b) of the dog clutch (6), such that the first and second dog clutch parts (6a, 6b) can be shifted from disengaged state to engaged state in a smooth and noise-free manner.

15. A hybrid electric vehicle having a vehicle power train system including:

a dog clutch (6) having first and second parts (6a, 6b),
a combustion engine (5) drivingly connected to the first electric machine (P1) that is operatively connected to the first part (6a) of the dog clutch (6), and
a second electric machine (P2) drivingly connected to the second part (6b) of the dog clutch (6), and
a dynamic physical system (28) according to claim 14.

**Patentansprüche**

1. Verfahren zur Kalibrierung der Rückkopplungsverstärkung **K** eines LQI-Steuergeräts, das in einer elektronischen Steuereinheit (25) implementiert ist, die zum Steuern des Betriebs einer physischen elektrischen oder elektromechanischen Vorrichtung (26) eines dynamischen physischen Systems (28) wirkverbunden ist, wobei das LQI-Steuergerät auf einem erweiterten Zustandsraummodell basiert, das die folgende Form aufweist:

$$\begin{bmatrix} \dot{x} \\ \varepsilon \end{bmatrix} = \boldsymbol{A}_{aug}x + \boldsymbol{B}_{aug}u + \begin{bmatrix} 0 \\ 1 \end{bmatrix} ref$$

$$y = \boldsymbol{C}_{aug} \begin{bmatrix} x \\ \varepsilon \end{bmatrix}$$

$$\boldsymbol{A}_{aug} = \begin{bmatrix} \boldsymbol{A} & 0 \\ -\boldsymbol{C} & 0 \end{bmatrix}, \boldsymbol{B}_{aug} = \begin{bmatrix} \boldsymbol{B} & 0 \end{bmatrix}^T, \boldsymbol{C}_{aug} = \begin{bmatrix} \boldsymbol{C} & 0 \end{bmatrix}$$

wobei das erweiterte Zustandsraummodell auf dem folgenden Zustandsraummodell basiert, welches das physische System darstellt:

$$\dot{x} = \boldsymbol{A}x + \boldsymbol{B}u$$

$$y = \boldsymbol{C}x$$

wobei $x$ Steuersystemzustandsvektor ist, $\varepsilon$ Steuersystemverfolgungsfehler ist, $u$ Steuersystemeingabe ist, *ref* Steuersystemzielreferenzwert ist, $y$ Steuersystemausgabe ist und **A, B, C** Matrizen darstellen, die von einem mathematischen Modell des dynamischen physischen Systems abgeleitet sind,
wobei das Verfahren zur Kalibrierung des LQI-Steuergeräts Folgendes umfasst:
Erhalten von Werten von verschiedenen physischen Parametern des dynamischen physischen Systems (28);
Einsetzen der erhaltenen Werte der physischen Parameter in vorbestimmte Gleichungen zum Berechnen von numerischen Werten der einzelnen Terme einer **P**-Matrix, wobei die **P**-Matrix die Lösung für die algebraische Riccati-Gleichung ist und wobei die Gleichungen die physischen Parameter des Systems (28) und funktionelle Anforderungen des Systems beinhalten; und
Berechnen von neuer Rückkopplungsverstärkung für das LQI-Steuergerät basierend auf der Matrixgleichung

$$\boldsymbol{K} = r^{-1}\boldsymbol{B}_{aug}^T\boldsymbol{P}$$ basierend auf einem willkürlich gewählten positiven Wert von r, wobei die Terme der **K**-Matrix der Rückkopplungsverstärkung entsprechen.

2. Verfahren nach Anspruch 1, wobei jede der Gleichungen zum Berechnen der Terme der **P**-Matrix eine Funktion von nicht mehr als Konstanten, erhaltbaren physischen Parametern des dynamischen physischen Systems (28), anderen Termen der **P**-Matrix und Termen der **Q**-Matrix ist.

3. Verfahren nach einem der vorhergehenden Ansprüche 1 bis 2, wobei die physischen Parameter des dynamischen Systems (28) erhalten werden:

manuell durch einen Benutzer, der die Werte der physischen Parameter des dynamischen Systems (28) misst, detektiert oder schätzt, und/oder
durch die elektronische Steuereinheit (25), die automatisch Messungen durchführt, die Werte der physischen Parameter des dynamischen Systems (28) detektiert oder schätzt.

4. Verfahren nach einem der vorhergehenden Ansprüche 1 bis 3, ferner umfassend eine Einrichtungsphase des LQI-Steuergeräts, die vor der Kalibrierung der Rückkopplungsverstärkung **K** durchgeführt wird, wobei die Einrichtungsphase Folgendes beinhaltet:

Bestimmen der Terme der Matrizen **A, B** und **C** in Form von Einsen, Nullen und Gleichungen, die physische Konstanten des Systems als Ausdruck aufweisen, während der Schritt des Umwandelns der Matrizen **A, B** und **C** in eine steuerbare kanonische Form weggelassen wird,
Bestimmen eines Rückkopplungssteuersystems, das ein integriertes lineares quadratisches (LQI) Steuergerät aufweist, das Systemeingabe u ausgibt, welche die Kriterien *J* minimiert, wobei

$$J = \int\limits_0^\infty [x^T \quad \varepsilon]Q[x^T \quad \varepsilon] + u^T r u$$

wobei *Q* Matrix ist und *r* ein Skalar ist und wobei das LQI-Rückkopplungssteuergerät die Rückkopplungsverstärkung beinhaltet,
Bestimmen der charakteristischen Gleichung des Steuersystems,
Bestimmen der Übertragungsfunktion des Steuersystems und anschließend Bestimmen der Stelle der Pole der Übertragungsfunktion,
Ableiten von Gleichungen für die Terme von jeder von der **Q-** und **P**-Matrix unter Verwendung der algebraischen

Riccati-Gleichung: $\boldsymbol{PA}_{aug} + \boldsymbol{A}_{aug}^T \boldsymbol{P} - \boldsymbol{PB}_{aug} r^{-1} \boldsymbol{B}_{aug}^T \boldsymbol{P} + \boldsymbol{Q} = 0$ .

5. Verfahren nach Anspruch 4, wobei Gleichungen für die Terme der **P**-Matrix auch basierend auf dem Nenner der Übertragungsfunktion in Kombination mit den Koeffizienten und konstanten Termen des charakteristischen Polynoms des Systems mit geschlossener Schleife abgeleitet sind.

6. Verfahren nach Anspruch 5, ferner umfassend Bestimmen der Stelle der Pole der Übertragungsfunktion durch Laplace-inverses Umwandeln des Nenners der Übertragungsfunktion und Eingeben der Werte eines beliebigen Punktes einer Stufenantwort der Übertragungsfunktion G(s), wodurch Berechnung der natürlichen Frequenz $w_n$ ermöglicht wird, was die Stelle der Pole der Übertragungsfunktion angibt.

7. Verfahren nach einem der vorhergehenden Ansprüche 5 oder 6, wobei der Schritt des Bestimmens der Stelle der Pole Berechnen der Pole als eine mathematische Funktion von mindestens einer vorbestimmten Leistungsanforderung des LQI-Steuergeräts involviert.

8. Verfahren nach einem der vorhergehenden Ansprüche 4 bis 7, wobei der Schritt des Weglassens von Umwandlung der Matrizen **A, B** und **C** in eine steuerbare kanonische Form den Termen der Matrizen **A, B** und **C** ermöglicht, ihre ursprünglichen Ausdrücke als Funktionen von detektierbaren Systemparametern beizubehalten, sodass die Gleichungen zum Berechnen der Terme der **P**-Matrix in Bezug auf Funktionen von detektierbaren Systemparametern ausgedrückt werden können, wodurch rechnereinfache Berechnung von neuer Rückkopplungsverstärkung ermöglicht wird, die zur Implementierung in einem System mit geringem Rechenaufwand geeignet ist.

9. Verfahren nach einem der vorhergehenden Ansprüche 1 bis 8, wobei das dynamische physische System (28) ein Fahrzeugsystem, spezifisch ein Fahrzeugantriebsstrangsystem, und spezifischer ein Fahrzeugantriebsstrangsystem ist, das eine erste elektrische Maschine (P1) aufweist, die mit einem ersten Teil (6a) einer Klauenkupplung (6) wirkverbunden ist, wobei die elektronische Steuereinheit (25) die Drehgeschwindigkeit des ersten Teils (6a) der Klauenkupplung (6) zur Geschwindigkeitssynchronisierung mit einem zweiten Teil (6b) der Klauenkupplung (6) steuert, sodass der erste und der zweite Klauenkupplungsteil (6a, 6b) von gelöstem Zustand in eingegriffenen Zustand auf eine reibungslose und geräuschfreie Weise geschaltet werden können.

10. Dynamisches physisches System (28), umfassend:

eine physische elektrische oder elektromechanische Vorrichtung (26) und
eine elektronische Steuereinheit (25), die mit der physischen elektrischen oder elektromechanischen Vorrichtung (26) wirkverbunden ist,
wobei die elektronische Steuereinheit (25) ein LQI-Steuergerät umfasst, das zum Steuern des Betriebs der physischen elektrischen oder elektromechanischen Vorrichtung (26) konfiguriert ist, wobei das LQI-Steuergerät auf einem erweiterten Zustandsraummodell basiert, das die folgende Form aufweist:

$$\begin{bmatrix} \dot{x} \\ \varepsilon \end{bmatrix} = \boldsymbol{A}_{aug}x + \boldsymbol{B}_{aug}u + \begin{bmatrix} 0 \\ 1 \end{bmatrix} ref$$

$$y = \boldsymbol{C}_{aug} \begin{bmatrix} x \\ \varepsilon \end{bmatrix}$$

$$\boldsymbol{A}_{aug} = \begin{bmatrix} \boldsymbol{A} & 0 \\ -\boldsymbol{C} & 0 \end{bmatrix}, \boldsymbol{B}_{aug} = \begin{bmatrix} \boldsymbol{B} & 0 \end{bmatrix}^T, \boldsymbol{C}_{aug} = \begin{bmatrix} \boldsymbol{C} & 0 \end{bmatrix}$$

wobei das erweiterte Zustandsraummodell auf dem folgenden Zustandsraummodell basiert, welches das physische System (28) darstellt:

$$\dot{x} = \boldsymbol{A}x + \boldsymbol{B}u$$

$$y = \boldsymbol{C}x$$

wobei $x$ Steuersystemzustandsvektor ist, $\varepsilon$ Steuersystemverfolgungsfehler ist, $u$ Steuersystemeingabe ist, *ref* Steuersystemzielreferenzwert ist, $y$ Steuersystemausgabe ist und **A, B, C** Matrizen darstellen, die von einem mathematischen Modell des dynamischen physischen Systems (28) abgeleitet sind,

wobei die elektronische Steuereinheit (25) ferner einen Datenspeicher (27) umfasst, der vorbestimmte Gleichungen zum Berechnen von numerischen Werten der einzelnen Terme einer **P**-Matrix beinhaltet, wobei die **P**-Matrix die Lösung für die algebraische Riccati-Gleichung ist und wobei die Gleichungen die physischen Parameter des Systems (28) und funktionelle Anforderungen des Systems beinhalten,

wobei die Rückkopplungsverstärkung des LQI-Steuergeräts dazu konfiguriert ist, durch Folgendes kalibriert zu werden:

Erhalten von Werten von verschiedenen physischen Parametern des dynamischen Systems (28);
Einsetzen der erhaltenen Werte der physischen Parameter in die vorbestimmten Gleichungen zum Berechnen von numerischen Werten der einzelnen Terme einer **P**-Matrix; und
Berechnen von neuer Rückkopplungsverstärkung für das LQI-Steuergerät basierend auf der Matrixgleichung $\boldsymbol{K} = r^{-1}\boldsymbol{B}_{aug}^T\boldsymbol{P}$ basierend auf einem willkürlich gewählten positiven Wert von $r$, wobei die Terme der **K**-Matrix der Rückkopplungsverstärkung entsprechen.

11. Dynamisches physisches System (28) nach Anspruch 10, wobei jede der Gleichungen zum Berechnen der Terme der **P**-Matrix eine Funktion von nicht mehr als Konstanten, erhaltbaren physischen Parametern des dynamischen Systems (28), anderen Termen der **P**-Matrix und Termen der **Q**-Matrix ist.

12. Dynamisches physisches System nach einem der vorhergehenden Ansprüche 10 bis 11,

wobei der Datenspeicher (27) ferner die Terme der Matrizen **A, B** und **C** in Form von Einsen, Nullen und Gleichungen, die physische Konstanten des Systems (28) als Ausdruck aufweisen, beinhaltet, wobei die Matrizen **A, B** und **C** nicht in eine steuerbare kanonische Form umgewandelt worden sind,

wobei das LQI-Steuergerät dazu konfiguriert ist, eine Steuersystemeingabe u auszugeben, welche die Kriterien $J$ minimiert, wobei

$$J = \int_0^\infty [x^T \quad \varepsilon]Q[x^T \quad \varepsilon] + u^T r u$$

und wobei $Q$ Matrix ist und r ein Skalar ist,
wobei die Gleichungen für die Terme der **Q**-Matrix in dem Datenspeicher (27) gespeichert sind.

**13.** Dynamisches physisches System (28) nach einem der vorhergehenden Ansprüche 10 bis 12, wobei die Matrizen **A,** B und **C,** die in dem Datenspeicher (27) gespeichert sind, nicht in eine steuerbare kanonische Form umgewandelt worden sind und die Terme der Matrizen **A,** B und C daher in ihren ursprünglichen Ausdrücken als Funktionen von detektierbaren Systemparametern beibehalten werden, sodass die Gleichungen zum Berechnen der Terme der **P-**Matrix in Bezug auf Funktionen von detektierbaren Systemparametern ausgedrückt werden können, wodurch rechnereinfache Berechnung von neuer Rückkopplungsverstärkung ermöglicht wird, die zur Implementierung in einem System mit geringem Rechenaufwand geeignet ist.

**14.** Dynamisches physisches System (28) nach einem der vorhergehenden Ansprüche 10 bis 13, wobei das dynamische physische System (28) ein Fahrzeugantriebsstrangsystem ist, das eine erste elektrische Maschine (P1) aufweist, die mit einem ersten Teil (6a) einer Klauenkupplung (6) wirkverbunden ist, wobei die elektronische Steuereinheit (25) dazu konfiguriert ist, die Drehgeschwindigkeit des ersten Teils (6a) der Klauenkupplung (6) zur Geschwindigkeitssynchronisierung mit einem zweiten Teil (6b) der Klauenkupplung (6) zu steuern, sodass der erste und der zweite Klauenkupplungsteil (6a, 6b) von gelöstem Zustand in eingegriffenen Zustand auf eine reibungslose und geräuschfreie Weise geschaltet werden können.

**15.** Hybridelektrofahrzeug mit einem Fahrzeugantriebsstrangsystem, beinhaltend:

eine Klauenkupplung (6), die einen ersten und einen zweiten Teil (6a, 6b) aufweist,
einen Verbrennungsmotor (5), der antriebsmäßig mit der ersten elektrischen Maschine (P1) verbunden ist, die mit dem ersten Teil (6a) der Klauenkupplung (6) wirkverbunden ist, und
eine zweite elektrische Maschine (P2), die antriebsmäßig mit dem zweiten Teil (6b) der Klauenkupplung (6) verbunden ist, und
ein dynamisches physisches System (28) nach Anspruch 14.

**Revendications**

**1.** Procédé d'étalonnage des gains de rétroaction K d'un contrôleur LQI mis en œuvre dans une unité de commande électronique (25) connectée de manière opérationnelle pour commander le fonctionnement d'un dispositif électrique ou électromécanique physique (26) d'un système physique dynamique (28), dans lequel le contrôleur LQI est basé sur un modèle d'espace d'état augmenté ayant la forme suivante :

$$\begin{bmatrix} \dot{x} \\ \varepsilon \end{bmatrix} = A_{aug}x + B_{aug}u + \begin{bmatrix} 0 \\ 1 \end{bmatrix} ref$$

$$y = C_{aug} \begin{bmatrix} x \\ \varepsilon \end{bmatrix}$$

$$A_{aug} = \begin{bmatrix} A & 0 \\ -C & 0 \end{bmatrix}, B_{aug} = \begin{bmatrix} B & 0 \end{bmatrix}^T, C_{aug} = \begin{bmatrix} C & 0 \end{bmatrix}$$

dans lequel le modèle d'espace d'état augmenté est basé sur le modèle d'espace d'état suivant représentant le système physique :

$$\dot{x} = Ax + Bu$$

$$y = Cx$$

dans lequel x est un vecteur d'état du système de commande, $\varepsilon$ est une erreur de suivi du système de commande, *u* est une entrée du système de commande, *ref* est une valeur de référence cible du système de commande, y est une sortie du système de commande, et A, B, C représentent des matrices dérivées d'un modèle mathématique du système physique dynamique,
dans lequel le procédé d'étalonnage du contrôleur LQI comprend :
l'obtention de valeurs de divers paramètres physiques du système physique dynamique (28) ;

l'insertion des valeurs obtenues des paramètres physiques dans des équations prédéterminées pour calculer des valeurs numériques des termes individuels d'une matrice P, dans lequel la matrice P est la solution de l'équation algébrique de Riccati, et dans lequel lesdites équations incluent les paramètres physiques du système (28) et des exigences fonctionnelles du système ; et

le calcul de nouveaux gains de rétroaction pour le contrôleur LQI sur la base de l'équation matricielle

$$K = r^{-1}B_{aug}^T P$$, sur la base d'une valeur positive de r choisie arbitrairement, dans lequel les termes de la matrice K correspondent aux gains de rétroaction.

2. Procédé selon la revendication 1, dans lequel chacune des équations pour calculer les termes de la matrice P est une fonction de pas plus que des constantes, des paramètres physiques pouvant être obtenus du système physique dynamique (28), d'autres termes de la matrice **P,** et des termes de la matrice **Q.**

3. Procédé selon l'une quelconque des revendications précédentes 1 à 2, dans lequel les paramètres physiques du système dynamique (28) sont obtenus :

manuellement par un utilisateur qui mesure, détecte ou estime les valeurs des paramètres physiques du système dynamique (28), et/ou
par l'unité de commande électronique (25) qui réalise automatiquement des mesures, détecte ou estime les valeurs des paramètres physiques du système dynamique (28).

4. Procédé selon l'une quelconque des revendications précédentes 1 à 3, comprenant en outre une phase de configuration du contrôleur LQI qui est réalisée avant ledit étalonnage des gains de rétroaction **K,** dans lequel la phase de configuration inclut :

la détermination des termes des matrices **A,** B et C sous forme de uns, de zéros, et d'équations ayant des constantes physiques du système comme expression, tout en omettant l'étape consistant à transformer les matrices A, B et C en une forme canonique commandable,
la détermination d'un système de commande par rétroaction ayant un contrôleur Linéaire Quadratique Intégral (LQI) qui délivre en sortie une entrée de système u qui minimise le critère J où

$$J = \int_{0}^{\infty} [x^T \quad \varepsilon]Q[x^T \quad \varepsilon] + u^T r u$$

dans lequel Q est une matrice et r est un scalaire, et dans lequel le contrôleur de rétroaction LQI inclut lesdits gains de rétroaction,
la détermination de l'équation caractéristique du système de commande,
la détermination de la fonction de transfert du système de commande, et par la suite la détermination de l'emplacement des pôles de la fonction de transfert,
la dérivation d'équations pour les termes de chacune des matrices Q et P en utilisant l'équation algébrique de Riccati :

$$PA_{aug} + A_{aug}^T P - PB_{aug}r^{-1}B_{aug}^T P + Q = 0.$$

5. Procédé selon la revendication 4, dans lequel des équations pour les termes de la matrice P sont également dérivées sur la base du dénominateur de la fonction de transfert en combinaison avec les coefficients et les termes constants du polynôme caractéristique du système en boucle fermée.

6. Procédé selon la revendication 5, comprenant en outre la détermination de l'emplacement des pôles de la fonction de transfert en réalisant une transformation de Laplace inverse du dénominateur de la fonction de transfert et en entrant les valeurs de n'importe quel point d'une réponse indicielle de la fonction de transfert G(s), permettant ainsi le calcul de la fréquence propre $w_n$, ce qui donne l'emplacement des pôles de la fonction de transfert.

7. Procédé selon l'une quelconque des revendications précédentes 5 ou 6, dans lequel l'étape consistant à déterminer l'emplacement des pôles implique le calcul des pôles en tant que fonction mathématique d'au moins une exigence de performance prédéterminée du contrôleur LQI.

8. Procédé selon l'une quelconque des revendications précédentes 4 à 7, dans lequel l'étape consistant à omettre la transformation des matrices A, B et C en une forme canonique commandable permet aux termes des matrices A, B et C de conserver leurs expressions d'origine en tant que fonctions de paramètres de système détectables, de telle sorte que les équations pour calculer les termes de la matrice P puissent être exprimées en termes de fonctions de paramètres de système détectables, permettant ainsi un calcul facile par ordinateur de nouveaux gains de rétroaction appropriés pour une mise en œuvre dans un système à faible charge de calcul.

9. Procédé selon l'une quelconque des revendications précédentes 1 à 8, dans lequel le système physique dynamique (28) est un système de véhicule, spécifiquement un système de groupe motopropulseur de véhicule, et plus spécifiquement un système de groupe motopropulseur de véhicule ayant une première machine électrique (P1) connectée de manière opérationnelle à une première partie (6a) d'un embrayage à griffes (6), dans lequel l'unité de commande électronique (25) commande la vitesse de rotation de la première partie (6a) de l'embrayage à griffes (6) pour une synchronisation de vitesse avec une seconde partie (6b) de l'embrayage à griffes (6), de sorte que les première et seconde parties d'embrayage à griffes (6a, 6b) puissent passer d'un état désengagé à un état engagé d'une manière fluide et sans bruit.

10. Système physique dynamique (28), comprenant :

un dispositif électrique ou électromécanique physique (26), et
une unité de commande électronique (25) connectée de manière opérationnelle au dispositif électrique ou électromécanique physique (26),
dans lequel l'unité de commande électronique (25) comprend un contrôleur LQI configuré pour commander le fonctionnement du dispositif électrique ou électromécanique physique (26), dans lequel le contrôleur LQI est basé sur un modèle d'espace d'état augmenté ayant la forme suivante :

$$\begin{bmatrix} \dot{x} \\ \varepsilon \end{bmatrix} = \boldsymbol{A}_{aug}x + \boldsymbol{B}_{aug}u + \begin{bmatrix} 0 \\ 1 \end{bmatrix} ref$$

$$y = \boldsymbol{C}_{aug} \begin{bmatrix} x \\ \varepsilon \end{bmatrix}$$

$$\boldsymbol{A}_{aug} = \begin{bmatrix} \boldsymbol{A} & 0 \\ -\boldsymbol{C} & 0 \end{bmatrix}, \boldsymbol{B}_{aug} = \begin{bmatrix} \boldsymbol{B} & 0 \end{bmatrix}^T, \boldsymbol{C}_{aug} = \begin{bmatrix} \boldsymbol{C} & 0 \end{bmatrix}$$

dans lequel le modèle d'espace d'état augmenté est basé sur le modèle d'espace d'état suivant représentant le système physique (28) :

$$\dot{x} = \boldsymbol{A}x + \boldsymbol{B}u$$

$$y = \boldsymbol{C}x$$

dans lequel x est un vecteur d'état du système de commande, $\varepsilon$ est une erreur de suivi du système de commande, *u* est une entrée du système de commande, *ref* est une valeur de référence cible du système de commande, y est une sortie du système de commande, et A, B, C représentent des matrices dérivées d'un modèle mathématique du système physique dynamique (28),
dans lequel l'unité de commande électronique (25) comprend en outre une mémoire de données (27) incluant des équations prédéterminées pour calculer des valeurs numériques des termes individuels d'une matrice P, dans lequel la matrice P est la solution de l'équation algébrique de Riccati, et dans lequel lesdites équations incluent les paramètres physiques du système (28) et des exigences fonctionnelles du système,
dans lequel les gains de rétroaction du contrôleur LQI sont configurés pour être étalonnés par :

l'obtention de valeurs de divers paramètres physiques du système dynamique (28) ;
l'insertion des valeurs obtenues des paramètres physiques dans les équations prédéterminées pour calculer des valeurs numériques des termes individuels d'une matrice P ; et

le calcul de nouveaux gains de rétroaction pour le contrôleur LQI sur la base de l'équation matricielle $\boldsymbol{K} = r^{-1}\boldsymbol{B}_{aug}^T\boldsymbol{P}$ , sur la base d'une valeur positive de r choisie arbitrairement, dans lequel les termes de la matrice K correspondent aux gains de rétroaction.

11. Système physique dynamique (28) selon la revendication 10, dans lequel chacune des équations pour calculer les termes de la matrice P est une fonction de pas plus que des constantes, des paramètres physiques pouvant être obtenus du système dynamique (28), d'autres termes de la matrice P, et des termes de la matrice Q.

12. Système physique dynamique selon l'une quelconque des revendications précédentes 10 à 11,

dans lequel la mémoire de données (27) inclut en outre les termes des matrices A, B et C sous forme de uns, de zéros, et d'équations ayant des constantes physiques du système (28) comme expression, dans lequel les matrices A, B et C n'ont pas été transformées en une forme canonique commandable,

dans lequel le contrôleur LQI est configuré pour délivrer en sortie une entrée de système u qui minimise le critère $J$ où

$$ J = \int_0^\infty [x^T \quad \varepsilon]Q[x^T \quad \varepsilon] + u^T r u $$

et où Q est une matrice et r est un scalaire,

dans lequel les équations pour les termes de la matrice Q sont stockées dans la mémoire de données (27).

13. Système physique dynamique (28) selon l'une quelconque des revendications précédentes 10 à 12, dans lequel les matrices **A,** B et C stockées dans la mémoire de données (27) n'ont pas été transformées en une forme canonique commandable, et les termes des matrices **A,** B et C sont par conséquent conservés dans leurs expressions d'origine en tant que fonctions de paramètres de système détectables, de telle sorte que les équations pour calculer les termes de la matrice P puissent être exprimées en termes de fonctions de paramètres de système détectables, permettant ainsi un calcul facile par ordinateur de nouveaux gains de rétroaction appropriés pour une mise en œuvre dans un système à faible charge de calcul.

14. Système physique dynamique (28) selon l'une quelconque des revendications précédentes 10 à 13, dans lequel le système physique dynamique (28) est un système de groupe motopropulseur de véhicule ayant une première machine électrique (P1) connectée de manière opérationnelle à une première partie (6a) d'un embrayage à griffes (6), dans lequel l'unité de commande électronique (25) est configurée pour commander la vitesse de rotation de la première partie (6a) de l'embrayage à griffes (6) pour une synchronisation de vitesse avec une seconde partie (6b) de l'embrayage à griffes (6), de telle sorte que les première et seconde parties d'embrayage à griffes (6a, 6b) puissent passer d'un état désengagé à un état engagé d'une manière fluide et sans bruit.

15. Véhicule électrique hybride ayant un système de groupe motopropulseur de véhicule incluant :

un embrayage à griffes (6) ayant des première et seconde parties (6a, 6b),

un moteur à combustion interne (5) connecté par entraînement à la première machine électrique (P1) qui est connectée de manière opérationnelle à la première partie (6a) de l'embrayage à griffes (6), et

une seconde machine électrique (P2) connectée par entraînement à la seconde partie (6b) de l'embrayage à griffes (6), et

un système physique dynamique (28) selon la revendication 14.

FIG. 1A

FIG. 1B

Vehicle speed= $v_{int}$    Vehicle speed= $v_1$

Series hybrid driving mode    Speed Synchronization    Dog clutch engagement

$T_{ICE}$ ———
$T_{P1}$ - - - - -

$= T_{ICE}$    Time [sec]

Torque [Nm]

$\omega_p$ ———
$\omega_s$ - - - -

Speed [rpm]    Time [sec]

$t_{synch}$

t1    t2

FIG.2

From P1

$\omega_p$

$\omega_s$

To P2

FIG.3A

6a

FIG.3B

6b

FIG.3C

FIG.4A     FIG.4B     FIG.4C     FIG.4D

FIG.5

$\omega_{diff}(t_{imp})$

$\omega_{diff}(t_{synch})$

$\dot{x}_p$

$\omega_{diff}(t_{synch})$

$\omega_{diff}(t_{imp})$

Disengaged
Dog clutch

Impact

## FIG.6A

$\omega_{diff}(t_{imp})$

$\omega_{diff}(t_{synch})$

Drag
Torque

$\dot{x}_p$

$\omega_{diff}(t_{synch})$

$\omega_{diff}(t_{imp}) < \omega_{diff}(t_{synch})$

Disengaged
Dog clutch

Impact

## FIG.6B

5    11    P1    6

$J_e$    $J_p$

$k$

$T_{ICE}$    $J_e$    $T_{DMF}$    $T_{DMF}$    $J_p$    $T_{P1}$

$\omega_e, \theta_e$    $\omega_p, \theta_p$

$d$

## FIG.7

FIG.8

FIG.9

FIG.10

FIG.11

**4th Order system response**

FIG.12

**Speed Synchronization**

FIG.13

FIG.14

FIG.15

FIG.16

FIG.17A

FIG.17B

FIG.18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Sliding Mode Controller Based on a Linear Quadratic Integral Regulator Surface for Power Control on a Dual Active Bridge Converter. **GONZALES OSCAR et al.** 2018 IEEE THIRD ECUADOR TECHNICAL CHAPTERS MEETING (ETCM). IEEE, 15 October 2018
- Time optimal control of gearbox synchronizers for minimizing noise and wear. **PIRACHA MUDDAS-SAR ZAHID et al.** 2020 IEEE CONFERENCE ON CONTROL TECHNOLOGY AND APPLICATIONS (CCTA). IEEE, 24 August 2020

- **PIRACHA MUDDASSAR ZAHID et al.** Feedback Control of Synchronizers for Reducing Impacts during Sleeve to Gear Engagement. *SAE INTERNATIONAL JOURNAL OF ADVANCES AND CURRENT PRACTICES IN MOBILITY*, 31 January 2020, vol. 2 (4)